(19) **Europäisches Patentamt / European Patent Office / Office européen des brevets**

(11) **EP 4 604 648 A1**

(12) **EUROPEAN PATENT APPLICATION**
published in accordance with Art. 153(4) EPC

(43) Date of publication:
20.08.2025 Bulletin 2025/34

(21) Application number: 23886040.7

(22) Date of filing: 04.10.2023

(51) International Patent Classification (IPC):
$H04W\ 72/23^{(2023.01)}$    $H04W\ 72/04^{(2023.01)}$
$H04W\ 72/12^{(2023.01)}$    $H04L\ 5/00^{(2006.01)}$
$H04L\ 5/14^{(2006.01)}$

(52) Cooperative Patent Classification (CPC):
H04L 5/00; H04L 5/14; H04W 72/04; H04W 72/12;
H04W 72/23

(86) International application number:
PCT/KR2023/015210

(87) International publication number:
WO 2024/096343 (10.05.2024 Gazette 2024/19)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 04.11.2022 KR 20220146400

(71) Applicant: Samsung Electronics Co., Ltd.
Suwon-si, Gyeonggi-do 16677 (KR)

(72) Inventors:
• SHIM, Jaeyeon
  Suwon-si, Gyeonggi-do 16677 (KR)
• CHOI, Kyungjun
  Suwon-si, Gyeonggi-do 16677 (KR)
• JI, Hyoungju
  Suwon-si, Gyeonggi-do 16677 (KR)
• CHOE, Hyemin
  Suwon-si, Gyeonggi-do 16677 (KR)

(74) Representative: HGF
HGF Limited
1 City Walk
Leeds LS11 9DX (GB)

(54) **DOWNLINK DATA CHANNEL TRANSMISSION METHOD AND DEVICE FOR FULL DUPLEX COMMUNICATION IN WIRELESS COMMUNICATION SYSTEM**

(57) The disclosure relates to a 5th generation (5G) or 6th generation (6G) communication system for supporting higher data rates. A method performed by a user equipment (UE) is disclosed, the method including receiving frequency domain resource assignment information from a base station, identifying, based on the frequency domain resource assignment information, at least one virtual resource block (VRB) associated with reception of a physical downlink shared channel (PDSCH), mapping the identified at least one VRB to at least one physical resource block (PRB), identifying whether the mapped at least one PRB overlaps with an uplink subband, and when the mapped at least one PRB is identified as overlapping with the uplink subband, receiving the PDSCH in at least one PRB excluding at least one PRB that overlaps with the uplink subband from the mapped at least one PRB.

**EP 4 604 648 A1**

**FIG. 1**

## Description

### Technical Field

The disclosure relates to operations of a user equipment (UE) and a base station (BS) in a wireless communication system. More particularly, the disclosure relates to a method of performing transmission and reception of a data channel by a UE that supports full-duplex communication and an apparatus capable of performing the same.

### Background Art

5th generation (5G) mobile communication technologies define wide frequency bands to allow for high transmission rates and new services, and may also be implemented not only in a sub-6 Gigahertz (GHz) band, e.g., 3.5 GHz, but also in an ultrahigh frequency band (above 6 GHz) called millimeter waves (mmWave) such as 28 GHz and 39 GHz. Moreover, for 6th generation (6G) mobile communication technologies called a beyond 5G system, it is considered to be implemented in Terahertz (THz) bands (e.g., bands from 95 GHz to 3 THz) to attain transmission rates 50 times higher than and ultra-low delay reduced to a tenth of the 5G mobile communication technology.

In an early stage of the 5G mobile communication technology, beamforming and massive multiple input multiple output (MIMO) to mitigate a radio path loss and increase the radio propagation distance in the ultra-high frequency band, support for various numerologies (operation of multiple subcarrier spacing) and dynamic slot format operation for efficient use of ultra-high frequency resources, initial access technologies for supporting multiple-beam transmission and widebands, definition and operation of bandwidth parts (BWPs), new channel coding schemes such as polar codes for highly reliable transmission of control information and low density parity check (LDPC) codes for high-volume data transmission, L2 preprocessing, network slicing for providing a dedicated network specialized for a particular service, etc., were standardized to support services and satisfy performance requirements for enhanced mobile broadband (eMBB), ultra-reliable low-latency communications (URLLC), and massive machine-type communications (mMTC).

Improvement and performance enhancement of the early 5G mobile communication technology are currently being discussed with consideration for the services that the 5G mobile communication technology has intended to support, and physical layer standardization for technologies such as vehicle-to-everything (V2X) to help driving decisions of autonomous vehicles and increase user convenience based on locations and status information of the vehicles transmitted by the vehicles, new radio unlicensed (NR-U) to aim at system operations conforming to various regulatory requirements in an unlicensed band, an NR terminal low-power consumption technology (UE power saving), non-terrestrial network (NTN), which is a direct terminal-satellite communication for securing coverage in a region where communication with a terrestrial network is unavailable, positioning, etc., is ongoing.

In addition, standardization of wireless interface architecture/protocol areas for technologies such as industrial Internet of things (IIoT) for supporting new services through connection and convergence with other industries, integrated access and backhaul (IAB) that provides a node to integrally support the wireless backhaul link and the access link to extend the network service area, mobility enhancement including conditional handover and dual active protocol stack (DAPS) handover, 2-step random access channel (RACH) for new radio (NR) to simplify the random access procedure, etc., and standardization of system architectures/service areas such as 5G baseline architectures (e.g., service based architectures or service based interfaces) for combination of network functions virtualization (NFV) and software-defined networking (SDN), mobile edge computing (MEC) to receive services based on a location of the terminal, etc., is also underway.

When such 5G mobile communication systems are commercialized, explosively increasing connected devices may be connected to the communication network, so that it is expected that enhancement of functions and performance of the 5G mobile communication system and integrated operation of the connected devices are required. For this, new research will be on the way for 5G performance enhancement and complexity reduction, artificial intelligence (AI) service support, metaverse service support, drone communication, etc., using AI, machine learning (ML) and extended reality (XR) to efficiently support augmented reality (AR), virtual reality (VR), mixed reality (MR), etc.

Advancement of the 5G mobile communication system may also be fundamental to developing not only a multiple antenna transmission technology such as large-scale antennas, array antennas, full dimensional multi-input multi-output (FD-MIMO) and new waveforms for guaranteeing coverage in THz bands of the 6G mobile communication technology, a high-dimensional spatial multiplexing technology using orbital angular momentum (OAM) and metamaterial based lens and antennas to enhance coverage of THz band signals, and a reconfigurable intelligent surface (RIS) technology, but also a full-duplex technology for frequency efficiency improvement and system network enhancement of the 6G mobile communication technology, an AI based communication technology to materialize system optimization by using a satellite and AI from a design stage and internalizing an end-to-end AI support function, a next generation distributed computing technology to materialize sophisticated services beyond the limit of terminal computation capacity by using ultra-high performance communication and computing resources, etc.

As various services have become available with advancements in wireless communication systems and the above-described technologies, a method for seamlessly providing these services is required.

**Disclosure of Invention**

**Solution to Problem**

A method performed by a user equipment (UE), according to an embodiment of the disclosure, may include receiving frequency domain resource assignment information from a base station. According to an embodiment of the disclosure, the method performed by the UE may include identifying, based on the frequency domain resource assignment information, at least one virtual resource block (VRB) associated with reception of a physical downlink shared channel (PDSCH). According to an embodiment of the disclosure, the method performed by the UE may include mapping the identified at least one VRB to at least one physical resource block (PRB). According to an embodiment of the disclosure, the method performed by the UE may include identifying whether the mapped at least one PRB overlaps with an uplink subband. According to an embodiment of the disclosure, the method performed by the UE may include, when the mapped at least one PRB is identified as overlapping with the uplink subband, receiving the PDSCH in at least one PRB excluding at least one PRB that overlaps with the uplink subband from the mapped at least one PRB.

A UE according to an embodiment of the disclosure may include a transceiver and at least one processor connected to the transceiver. The at least one processor may be configured to receive frequency domain resource assignment information from a base station. The at least one processor may be configured to identify, based on the frequency domain resource assignment information, at least one VRB associated with reception of a PDSCH. The at least one processor may be configured to map the identified at least one VRB to at least one PRB. The at least one processor may be configured to identify whether the mapped at least one PRB overlaps with an uplink subband. The at least one processor may be configured to, when the mapped at least one PRB is identified as overlapping with the uplink subband, receive the PDSCH in at least one PRB excluding at least one PRB that overlaps with the uplink subband from the mapped at least one PRB.

A method performed by a base station, according to an embodiment of the disclosure, may include mapping at least one VRB associated with transmission of a PDSCH to at least one PRB. According to an embodiment of the disclosure, the method performed by the base station may include identifying whether the at least one VRB overlaps with an uplink subband. According to an embodiment of the disclosure, the method performed by the base station may include, when the at least one VRB is identified as overlapping with the uplink subband, transmitting the PDSCH in at least one PRB excluding, from the mapped at least one PRB, at least one PRB corresponding to the at least one VRB that overlaps with the uplink subband. According to an embodiment of the disclosure, the method performed by the base station may include, when the at least one VRB is identified as not overlapping with the uplink subband, transmitting the PDSCH in the mapped at least one PRB.

A base station according to an embodiment of the disclosure may include a transceiver and at least one processor connected to the transceiver. The at least one processor may be configured to map at least one VRB associated with transmission of a PDSCH to at least one PRB. The at least one processor may be configured to identify whether the at least one VRB overlaps with an uplink subband. The at least one processor may be configured to, when the at least one VRB is identified as overlapping with the uplink subband, transmit the PDSCH in at least one PRB excluding, from the mapped at least one PRB, at least one PRB corresponding to the at least one VRB that overlaps with the uplink subband. The at least one processor may be configured to, when the at least one VRB is identified as not overlapping with the uplink subband, transmit the PDSCH in the mapped at least one PRB.

**Brief Description of Drawings**

FIG. 1 illustrates a basic structure of a time-frequency domain in a wireless communication system, according to an embodiment of the disclosure.

FIG. 2 illustrates a frame, subframe, and slot structure in a wireless communication system, according to an embodiment of the disclosure.

FIG. 3 illustrates an example of configuration of bandwidth parts (BWPs) in a wireless communication system, according to an embodiment of the disclosure.

FIG. 4 illustrates an example of configuration of control resource sets of a downlink (DL) control channel in a wireless communication system, according to an embodiment of the disclosure.

FIG. 5 illustrates a structure of a DL control channel in a wireless communication system, according to an embodiment of the disclosure.

FIG. 6 is a diagram for describing a method by which a base station (BS) and a user equipment (UE) transmit and receive data by considering a DL data channel and a rate matching resource in a wireless communication system, according to an embodiment of the disclosure.

FIG. 7 illustrates an example of frequency domain resource allocation for a physical downlink shared channel (PDSCH) in a wireless communication system, according to an embodiment of the disclosure.

FIG. 8 illustrates an example of time domain resource allocation of a PDSCH in a wireless communication system, according to an embodiment of the disclosure.

FIG. 9 illustrates an example of time domain resource allocation based on subcarrier spacings (SCSs) of a data channel and a control channel in a wireless communication system, according to an embodiment of the disclosure.

FIG. 10 is a diagram illustrating a method of configuring a subband nonoverlapping full duplex (SBFD) configuration in a wireless communication system, according to an embodiment of the disclosure.

FIG. 11 is a diagram illustrating an example of virtual resource block (VRB) allocation and a VRB-to-physical resource block (PRB) mapping method, according to an embodiment of the disclosure.

FIG. 12 is a diagram illustrating an example of VRB allocation and a VRB-to-PRB mapping method in an SBFD system, according to an embodiment of the disclosure.

FIG. 13 is a diagram illustrating an example of VRB allocation and a VRB-to-PRB mapping method in an SBFD system, according to an embodiment of the disclosure.

FIG. 14 illustrates a structure of a user equipment (UE) in a wireless communication system, according to an embodiment of the disclosure.

FIG. 15 illustrates a structure of a base station in a wireless communication system, according to an embodiment of the disclosure.

## Mode for the Invention

Hereinafter, embodiments of the disclosure will be described in detail with reference to the accompanying drawings.

In the following description of embodiments, descriptions of technical features that are well- known in the art to which the disclosure pertains and are not directly related to the disclosure are omitted. This is for clearly describing the essence of the disclosure without obscuring it by omitting the unnecessary descriptions.

For the same reason, in the accompanying drawings, some components are exaggerated, omitted, or schematically illustrated. Furthermore, the size of each element does not entirely reflect an actual size thereof. In the drawings, the same reference numerals refer to the same or corresponding elements throughout.

Advantages and features of the disclosure and methods of accomplishing the same will be understood more clearly by referring to the following description of embodiments and the accompanying drawings. However, the disclosure may be embodied in many different forms and should not be construed as being limited to the disclosed embodiments set forth below; rather, the present embodiments are provided so that the disclosure will be thorough and complete and will fully convey the scope of the disclosure to those of ordinary skill in the art, and the disclosure will only be defined by the appended claims. Throughout the specification, like reference numerals refer to like elements. Furthermore, in the description of the disclosure, when it is determined that a detailed description of related functions or configurations may unnecessarily obscure the subject matter of the disclosure, the detailed description will be omitted. In addition, the terms, as will be described later, are defined by taking functions described in the disclosure into account and may vary according to practices or a user's or operator's intention. Therefore, definition of the terms should be made based on the overall descriptions in the specification.

In the following description, a base station is an entity that allocates resources to a terminal (or a user equipment (UE)), and may be at least one of a next-generation Node B (gNode B), an evolved Node B (eNode B), a Node B, a base station (BS), a radio access unit, a BS controller, or a node on a network. A terminal may include a UE, a mobile station (MS), a cellular phone, a smart phone, a computer, or a multimedia system capable of performing a communication function. In the disclosure, downlink (DL) refers to a radio transmission path for a signal transmitted from a BS to a UE, and uplink (UL) refers to a radio transmission path for a signal transmitted from a UE to a BS. Furthermore, although embodiments of the disclosure are hereinafter described with respect to a long-term evolution (LTE) or LTE-Advanced (LTE-A) system, the embodiments of the disclosure may be applied to other communication systems having similar technical backgrounds and channel configurations. For example, a 5th generation (5G) (new radio (NR)) mobile communication technology developed after LTE-A may be included in the other communication systems, and hereinafter, 5G is a concept including existing LTE, LTE-A and other similar services. Furthermore, the disclosure is applicable to other communication systems through some modifications within a range that does not greatly depart from the scope of the disclosure when judged by one skilled in the art.

It will be understood that each block of a flowchart in the drawings and combinations of blocks of the flowchart may be performed by computer program instructions. These computer program instructions may be loaded onto a processor of a general-purpose computer, a special-purpose computer, or other programmable data processing equipment, and thus, the instructions performed via the processor of the computer or other programmable data processing equipment generate a means for performing functions specified in the flowchart block(s). The computer program instructions may also be stored in a computer-executable or computer-readable memory capable of directing the computer or the other programmable data processing equipment to implement functions in a specific manner, and thus, the instructions stored in the computer-executable or computer-readable memory are capable of producing an article of manufacture including instruction means for performing the functions described in the flowchart block(s). The computer program instructions may also be loaded into the computer or the other programmable data processing equipment, and thus, instructions for operating the computer or the other programmable data processing equipment by generating a computer-executed process when a series of operations are performed in the computer or the other programmable data processing equipment may provide operations for performing the functions described in the flowchart block(s).

Furthermore, each block may represent a portion of a module, segment, or code that includes one or more executable instructions for executing specified logical function(s). It should also be noted that, in some alternative implementations, functions mentioned in blocks may occur out of order. For example, two blocks illustrated in succession may be executed substantially simultaneously, or the blocks may sometimes be executed in reverse order depending on functions corresponding thereto.

As used herein, the term 'unit' denotes a software element or a hardware element such as a field-programmable gate array (FPGA) or an application-specific integrated circuit (ASIC), and the unit" performs certain functions. However, the term 'unit' is not limited to software or hardware. The 'unit' may be configured to be in an addressable storage medium or configured to operate one or more processors. Thus, the term 'unit' may include, for example, elements such as software elements, object-oriented software elements, class elements, and task elements, processes, functions, attributes, procedures, subroutines, segments of program code, drivers, firmware, micro-codes, circuits, data, a database, data structures, tables, arrays, and variables. Functions provided by elements and 'units' may be combined into the smaller number of elements and 'units', or may be further divided into additional elements and 'units'. Furthermore, the elements and 'units' may be implement to operate one or more central processing units (CPUs) in a device or security multimedia card. In addition, in an embodiment, the 'unit' may include one or more processors.

Wireless communication systems have progressed beyond providing initial voice-centered services into broadband wireless communication systems that provide highspeed, high-quality packet data services based on communication standards such as 3rd Generation Partnership Project (3GPP)'s High Speed Packet Access (HSPA), LTE or Evolved Universal Terrestrial Radio Access (E-UTRA), LTE-A, LTE-Pro, 3GPP2's High Rate Packet Data (HRPD), Ultra Mobile Broadband (UMB), and the Institute of Electrical and Electronic Engineers (IEEE) 802.16e.

As a representative example of such a broadband wireless communication system, an LTE system adopts an orthogonal frequency division multiplexing (OFDM) scheme for DL and a single carrier frequency division multiple access (SC-FDMA) scheme for UL. UL refers to a radio link through which a UE or MS transmits data or a control signal to a BS (or eNB), and DL refers to a radio link through which a BS transmits data or a control signal to a UE. In the multiple access schemes as described above, data or control information of each user may be distinguished by allocating and operating time-frequency resources carrying the data or the control information for each user so that they do not overlap with each other, i.e., so as to establish orthogonality between the time-frequency resources.

Because a post-LTE communication system, i.e., a 5G communication system, needs to be able to freely reflect various requirements from users and service providers, the 5G communication system is required to support services that simultaneously satisfy the various requirements. Services being considered for 5G communication systems include Enhanced Mobile BroadBand (eMBB), Massive Machine Type Communication (mMTC), Ultra-Reliable Low-Latency Communication (URLLC), etc.

eMBB is aimed to provide significantly higher data transfer rates than those supported by the existing LTE, LTE-A, or LTE-Pro. For example, in 5G communication systems, eMBB should be able to deliver peak data rates of 20 gigabits per second (Gbps) in DL and 10 Gbps in UL from a BS perspective. Furthermore, the 5G communication systems should be able to provide better user perceived data rates while simultaneously delivering the peak data rates. To meet such requirements, the 5G communication systems require improvement of various transmission and reception technologies including a further improved multi-input multi-output (MIMO) transmission technology. Furthermore, while a current LTE system transmits signals by using a transmission bandwidth up to 20 megahertz (MHz) in the 2 GHz band, a 5G communication system may satisfy data transfer rates required by a 5G technology by using a wider frequency bandwidth than 20 MHz in the 3 GHz to 6 GHz bands or the bands above 6 GHz.

At the same time, mMTC is being considered to support application services such as the Internet of things (IoT) in 5G communication systems. In order to efficiently provide the IoT, the mMTC may require support of connections with a massive number of terminals (or UEs) in a cell, enhanced terminal coverage, improved battery life, low terminal cost, etc. Because the IoT is a system equipped with multiple sensors and various devices to provide communication functions, it must be able to support a large number of terminals (e.g., 1,000,000 terminals per square kilometer ($km^2$)) in a cell. Furthermore, because a terminal supporting the mMTC is highly likely to be located in a shaded area that cannot be covered by a cell, such as a basement of a building, due to characteristics of the service, the mMTC may require wide area coverage compared to other services provided by a 5G communication system. The terminal supporting the mMTC should be configured as a low-cost terminal and may require a very long battery lifetime such as 10 to 15 years because it is difficult to frequently replace a battery of the terminal.

Lastly, URLLC is a cellular-based wireless communication service used for mission-critical applications. For example, possible applications of the URLLC may include services used for remote control of robots or machinery, industrial automation, unmanned aerial vehicles (UAVs), remote health care, emergency alert services, etc. Thus, communication offered by the URLLC requires very low latency and very high reliability. For example, services supporting URLLC need to satisfy sub-millisecond (less than 0.5 millisecond) air interface latency and simultaneously require a packet error rate of $10^{-5}$ or less. Thus, for the services supporting URLLC, a 5G system needs to provide a transmission time interval (TTI) shorter than for other services and may simultaneously require a design for allocating wide frequency-band resources to ensure high reliability of a communication link.

The three services supported by 5G, i.e., eMBB, URLLC, and mMTC, may be multiplexed in a single system for transmission. In this regard, different transmission and reception schemes and transmission and reception parameters may be used between services to satisfy different requirements for the respective services. However, 5G is not limited to the three services.

According to an embodiment of the disclosure, a method of scheduling a physical downlink shared channel (PDSCH) in a wireless communication system is provided. The method may include scheduling the PDSCH with reference to information about a UL subband when PDSCH frequency resource information is configured for a UE by a BS. The method may include a resource block (RB) bundling method by taking into account a UL subband when the PDSCH frequency resource information is configured for the UE by the BS. The method may include a method of mapping virtual RBs (VRBs) to physical resource blocks (PRBs) when the PDSCH frequency resource information is configured for the UE by the BS. The method may include a method that does not consider information about a UL subband and a method that considers information about a UL subband.

[NR time-frequency resource]

A frame structure in a 5G system is described in more detail with reference to the accompanying drawings.

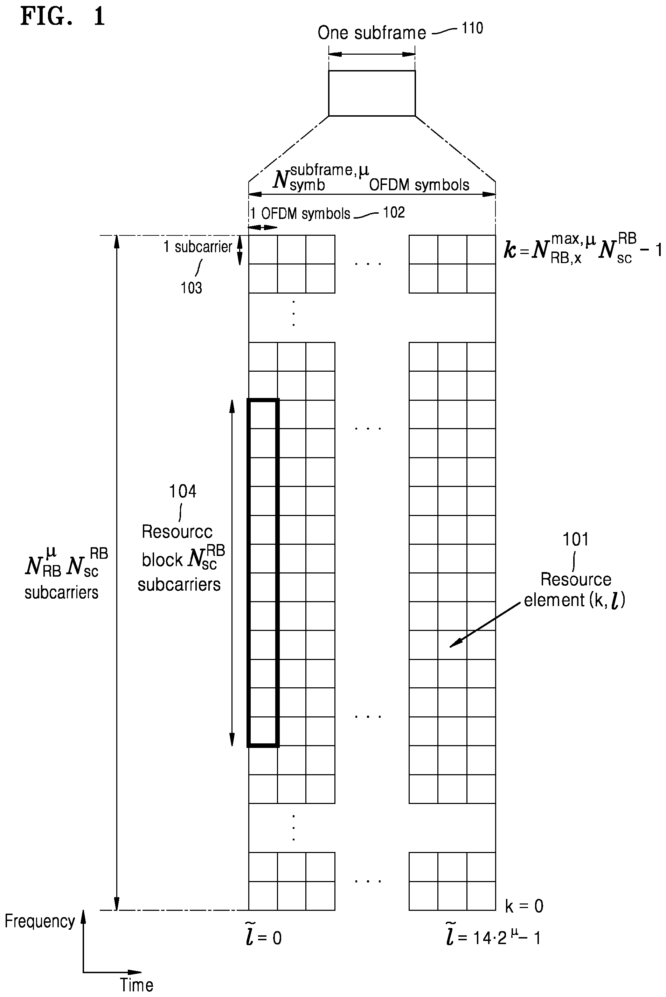

FIG. 1 illustrates a basic structure of a time-frequency domain, which is a radio resource domain in which data or a control channel is transmitted in a 5G system.

In FIG. 1, the horizontal axis represents the time domain, and the vertical axis represents the frequency domain. A basic resource unit in the time and frequency domain is a resource element (RE) 101, which may be defined as an orthogonal frequency division multiplexing (OFDM) symbol 102 on the time axis and a subcarrier 103 on the frequency axis. In the frequency domain, $N_{SC}^{RB}$ (e.g., 12) consecutive REs may constitute a single RB 104.

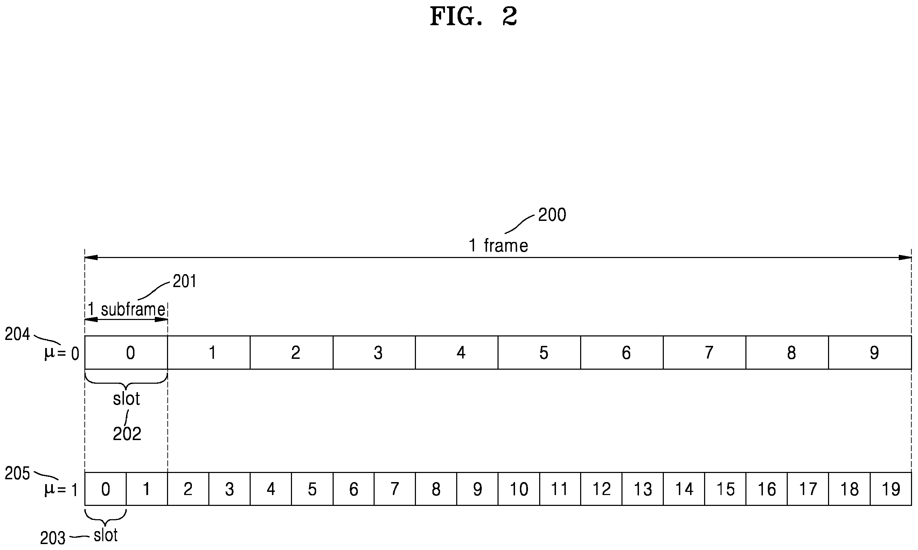

FIG. 2 illustrates a frame, subframe, and slot structure in a wireless communication system, according to an embodiment of the disclosure.

In FIG. 2, shown is an example of a structures of a frame 200, a subframe 201 and a slot 202. The one frame 200 may be defined to be 10 ms long. The one subframe 201 may be defined to be 1 ms, and thus, a total of 10 subframes 201 may constitute the one frame 200. The one slot 202 or 203 may be defined to have 14 OFDM symbols (i.e., the number of symbols per 1 slot ($N_{symb}^{slot}$) $= 14$). The one subframe 201 may include one or more slots 202 or 203, and the number of slots 202 and 203 per 1 subframe may vary depending on subcarrier spacing (SCS) configuration values $\mu$ (204 and 205). In the example of FIG. 2, as the SCS configuration values, $\mu =0$ (204) and $\mu =1$ (205) are shown. In the case of $\mu =0$ (204), the one subframe 201 may include one slot 202, and in the case of $\mu =1$ (205), one subframe 201 may include two slots 203.

That is, depending on the SCS configuration value $\mu$, the number of slots per 1 subframe ($N_{slot}^{subframe,\mu}$) may vary, and the number of slots per 1 frame ($N_{slot}^{frame,\mu}$) may vary accordingly. $N_{slot}^{subframe,\mu}$ and $N_{slot}^{frame,\mu}$ depending on the SCS configuration value $\mu$ may be defined as in Table 1 below.

[Table 1]

| $\mu$ | $N_{symb}^{slot}$ | $N_{slot}^{frame,\mu}$ | $N_{slot}^{subframe,\mu}$ |
|---|---|---|---|
| 0 | 14 | 10 | 1 |
| 1 | 14 | 20 | 2 |

(continued)

| $\mu$ | $N_{symb}^{slot}$ | $N_{slot}^{frame,\mu}$ | $N_{slot}^{subframe,\mu}$ |
|---|---|---|---|
| 2 | 14 | 40 | 4 |
| 3 | 14 | 80 | 8 |
| 4 | 14 | 160 | 16 |
| 5 | 14 | 320 | 32 |

[Bandwidth part (BWP)]

Next, a configuration for bandwidth parts (BWPs) in the 5G communication system is described in detail with reference to related drawings.

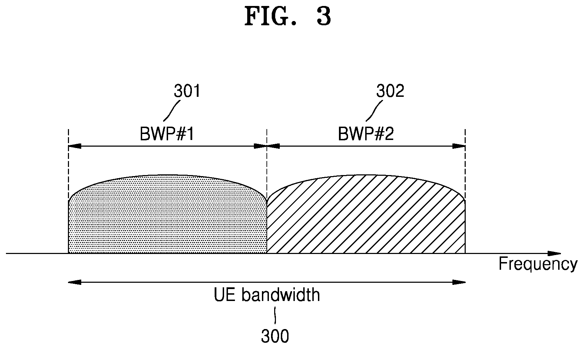

FIG. 3 illustrates an example of configuration of bandwidth parts (BWPs) in a wireless communication system, according to an embodiment of the disclosure.

In the example of FIG. 3, UE bandwidth 300 is configured into two BWPs, BWP#1 301 and BWP#2 302. The BS may configure the UE with one or more BWPs, and configure information of Table 2 below for each BWP.

[Table 2]

```
BWP ::=                     SEQUENCE {
    bwp-Id                      BWP-Id,
    ( Identity of BWP )
    locationAndBandwidth        INTEGER (1..65536),
    ( Location of BWP )
    subcarrierSpacing           ENUMERATED {n0, n1, n2, n3, n4, n5},
    ( Subcarrier Spacing )
    cyclicPrefix                ENUMERATED { extended }
    ( Cyclic prefix )
}
```

However, configuration for a BWP is not limited to the example, and various parameters related to a BWP may be configured for the UE in addition to the above configuration information. The information may be transmitted by the BS to the UE through higher layer signaling, e.g., radio resource control (RRC) signaling. At least one of the configured one or more BWPs may be activated. Whether to activate a configured BWP may be notified from the BS to the UE semi-statically by RRC signaling or dynamically in DL control information (DCI).

According to some embodiments, the UE may be configured by the BS with an initial BWP for initial access in a Master Information Block (MIB) before the UE is RRC connected. Specifically, the UE may receive configuration information for a control resource set (or CORESET) and search space in which a physical downlink control channel (PDCCH) may be transmitted for receiving system information (corresponding to remaining system information (RMSI) or system information block 1 (SIB1)) required for initial access through the MIB in an initial access process. The control resource set and search space configured in the MIB may each be regarded with identity (ID) 0. The BS may notify the UE of configuration information, such as frequency allocation information, time allocation information, numerology, etc., for control resource set #0, in the MIB. The BS may also notify the UE of configuration information for a monitoring periodicity and occasion for the control resource set #0, i.e., configuration information for search space #0 in the MIB. The UE may regard a frequency area set to the control resource set #0 obtained from the MIB as the initial BWP for initial access. In this case, the ID of the initial BWP may be regarded as 0.

Such configuration of the BWP supported by the 5G may be used for various purposes.

According to some embodiments, an occasion when the bandwidth supported by the UE is smaller than the system bandwidth may be addressed by the BWP configuration. For example, the BS may configure the UE with frequency location of the BWP (configuration information 2), thereby allowing the UE to transmit or receive data in the particular frequency location in the system bandwidth.

Furthermore, according to some embodiments, for the purpose of supporting different numerologies, the BS may configure a plurality of BWPs for the UE. For example, to support data transmission and reception using both 15 KHz SCS and 30 KHz SCS for a UE, two BWPs may be configured with 15 KHz and 30 KHz SCSs, respectively. The different BWPs may be frequency division multiplexed, and for data transmission and reception with a particular SCS, a BWP configured with the corresponding SCS may be activated.

Furthermore, according to some embodiments, for the purpose of reducing power consumption of the UE, the BS may configure BWPs with different bandwidth sizes for the UE. For example, when a UE supports very large bandwidth, e.g., 100 MHz bandwidth, and always transmits or receives data in the bandwidth, the UE may consume very large power. In particular, in a situation where there is no traffic, monitoring unnecessary DL control channel in the large 100 MHz bandwidth may be very inefficient in terms of power consumption. To reduce the power consumption of the UE, the BS may configure a BWP with relatively small bandwidth, e.g., a 20 MHz BWP, for the UE. In the situation where there is no traffic, the UE may perform monitoring on the 20 MHz BWP, and when data occurs, the UE may transmit or receive the data in the 100 MHz BWP according to instructions from the BS.

In the method of configuring a BWP, UEs may receive configuration information for the initial BWP in the MIB in an initial access process before being RRC connected. Specifically, the UE may be configured, via the MIB in a physical broadcast channel (PBCH), with a control resource set (or CORESET) for a DL control channel on which DCI may be transmitted to schedule an SIB. Bandwidth of the control resource set configured in the MIB may be regarded as the initial BWP, and the UE may receive a PDSCH on which the SIB is transmitted in the configured initial BWP. The initial BWP may also be used for other system information (OSI), paging, or random access apart from reception of the SIB.

[BWP switching]

When one or more BWPs are configured for the UE, the BS may indicate, to the UE, switching or transition of BWP by using a BWP indicator field in DCI. For example, when a currently active BWP for the UE is the BWP#1 301 in FIG. 3, the BS may indicate the BWP#2 302 to the UE via a BWP indicator in the DCI, and UE may perform BWP switching to the BWP#2 302 indicated via the BWP indicator in the received DCI.

Because the DCI-based BWP switching may be indicated by DCI that schedules a PDSCH or physical UL shared channel (PUSCH) as described above, the UE may be able to transmit or receive the PDSCH or the PUSCH scheduled by the DCI in the switched BWP without difficulty when receiving the BWP switching request. For this purpose, the standard specifies a requirement for BWP switch delay $T_{BWP}$ required for BWP switching, which may be defined, for example, as in Table 3 below:

[Table 3]

| $\mu$ | NR Slot length (ms) | BWP switch delay $T_{BWP}$ (slots) | |
| --- | --- | --- | --- |
| | | Type 1[Note 1] | Type 2[Note 1] |
| 0 | 1 | 1 | 3 |
| 1 | 0.5 | 2 | 5 |
| 2 | 0.25 | 3 | 9 |
| 3 | 0.125 | 6 | 18 |
| Note 1: Depends on UE capability. Note 2: If the BWP switch involves changing of SCS, the BWP switch delay is determined by the larger one between the SCS before BWP switch and the SCS after BWP switch. | | | |

The requirement for BWP switch delay supports type 1 or type 2 depending on a capability of the UE. The UE may report a supportable BWP delay type to the BS.

According to the requirement for the BWP switch delay, when receiving a DCI including a BWP switch indicator in slot n, the UE may complete switching to a new BWP indicated by the BWP switch indicator at a time that is no later than slot $n+T_{BWP}$, and perform transmission and reception for a data channel scheduled by the corresponding DCI in the new BWP. In order to schedule a data channel on a new BWP, the BS may determine time domain resource allocation for the data channel by considering the BWP switch delay $T_{BWP}$ of the UE. In other words, when scheduling the data channel with the new BWP, in a method of determining time domain resource allocation for the data channel, the BS may schedule the data channel after the BWP switch delay. Accordingly, the UE may not expect that a DCI indicating BWP switching indicates a slot offset value (K0 or K2) smaller than the BWP switch delay $T_{BWP}$.

When the UE receives DCI (e.g., DCI format 1_1 or 0_1) that indicates BWP switching, the UE may not perform transmission or reception during a time interval from a third symbol of the slot in which a PDCCH including the DCI is received to a starting point of a slot indicated by the slot offset value (K0 or K2) indicated in a time domain resource allocation indicator field in the DCI. For example, when the UE has received DCI that indicates BWP switching in slot n and the slot offset value indicated by the DCI is K, the UE may not perform any transmission or reception from the third symbol of the slot n to a symbol before slot n+K (i.e., the last symbol of slot n+K-1).

[SS/PBCH block]

A synchronization signal (SS)/PBCH block in 5G will now be described.

An SS/PBCH block may refer to a physical layer channel block including primary SS (PSS), secondary SS (SSS), and PBCH, which are defined as follows:

- PSS: a reference signal for DL time/frequency synchronization, which provides partial information of a cell ID.
- SSS: a reference signal for DL time/frequency synchronization, which provides the rest of the cell ID information not provided by the PSS. It may also serve as another reference signal for demodulation of the PBCH.
- PBCH: a channel for providing essential system information required for transmission or reception of data channel and control channel for UE. The essential system information may include search-space-related control information indicating radio resource mapping information of the control channel, scheduling control information for an extra data channel that transmits system information.
- SS/PBCH block: SS/PBCH block is a combination of PSS, SSS, and PBCH. One or more SS/PBCH blocks may be transmitted in 5 ms, and each of the SS/PBCH block may be distinguished by an index.

The UE may detect the PSS and the SSS in the initial access process, and decode the PBCH. The UE may obtain an MIB from the PBCH and may be configured with control resource set (or CORESET) #0 (corresponding to a control resource set indexed by 0) through the MIB. The UE may assume that a demodulation reference signal (DMRS) transmitted in the selected SS/PBCH block and control resource set #0 is quasi-colocated (QCL), and may perform monitoring on the control resource set #0. The UE may receive system information in the DL control information transmitted in the control resource set #0. The UE may obtain random-access channel (RACH) related configuration information required for initial access from the received system information. The UE may transmit a physical RACH (PRACH) to the BS in consideration of the selected SS/PBCH index, and upon reception of the PRACH, the BS may obtain information about the SS/PBCH block index selected by the UE. The BS may know that the UE has selected any one of the respective SS/PBCH blocks and is monitoring the control resource set #0 associated with the selected SS/PBCH.

[PDCCH: DCI]

DCI in the 5G system will now be described in detail.

In the 5G system, scheduling information for UL data (or PUSCH) or DL data (or PDSCH) is transmitted from the BS to the UE in DCI. The UE may monitor a fallback DCI format and a non-fallback DCI format for a PUSCH or a PDSCH. The fallback DCI format may include fixed fields predefined between the BS and the UE, and a non-fallback DCI format may include configurable fields.

The DCI may be transmitted on a PDCCH after going through channel coding and modulation processes. A cyclic redundancy check (CRC) may be appended to a DCI message payload, and the CRC may be scrambled by a radio network temporary identifier (RNTI) that corresponds to an ID of the UE. Different RNTIs may be used depending on the use of the DCI message, e.g., UE-specific data transmission, a power control command, a random access response (RAR), or the like. In other words, the RNTI is not explicitly transmitted but is transmitted in a CRC calculation process. Upon reception of a DCI message transmitted on the PDCCH, the UE may check CRC using an assigned RNTI, and determine that the DCI message is transmitted to the UE when the CRC check result is correct.

For example, DCI that schedules a PDSCH for system information (or SI) may be scrambled by SI-RNTI. DCI that schedules a PDSCH for a RAR message may be scrambled by an RA-RNTI. DCI that schedules a PDSCH for a paging message may be scrambled by a P-RNTI. DCI that notifies a slot format indicator (SFI) may be scrambled by an SFI-RNTI. DCI that notifies transmit power control (TPC) may be scrambled by a TPC-RNTI. DCI for scheduling a UE-specific PDSCH or PUSCH may be scrambled by a Cell RNTI (C- RNTI).

DCI format 0_0 may be used for the fallback DCI that schedules a PUSCH, in which case the CRC may be scrambled by a C-RNTI. The DCI format 0_0 with the CRC scrambled by the C-RNTI may include, for example, information in Table 4 below.

[Table 4]

- Identifier for DCI formats - [1] bit

- Frequency domain resource assignment - $[\lceil \log_2(N_{RB}^{UL,BWP}(N_{RB}^{UL,BWP}+1)/2) \rceil]$ bits

- Time domain resource assignment - X bits
- Frequency hopping flag - 1 bit.
- Modulation and coding scheme - 5 bits
- New data indicator - 1 bit
- Redundancy version - 2 bits
- HARQ process number - 4 bits
- TPC command for scheduled PUSCH - [2] bits
- UL/SUL indicator - 0 or 1 bit

DCI format 0_1 may be used for the non-fallback DCI that schedules a PUSCH, in which case the CRC may be scrambled by a C-RNTI. The DCI format 0_1 with the CRC scrambled by the C-RNTI may include, for example, information in the following Table 5.

[Table 5]

- Carrier indicator - 0 or 3 bits
- UL/SUL indicator - 0 or 1 bit
- Identifier for DCI formats - [1] bits
- Bandwidth part indicator - 0, 1 or 2 bits
- Frequency domain resource assignment

    • For resource allocation type 0, $\lceil N_{RB}^{UL,BWP}/P \rceil$ bits

    • For resource allocation type 1, $\lceil \log_2(N_{RB}^{UL,BWP}(N_{RB}^{UL,BWP}+1)/2) \rceil$ bits

- Time domain resource assignment -1, 2, 3, or 4 bits
- VRB(virtual resource block)-to-PRB(physical resource block) mapping - 0 or 1 bit, only for resource allocation type 1.
    • 0 bit if only resource allocation type 0 is configured;
    • 1 bit otherwise.
- Frequency hopping flag - 0 or 1 bit, only for resource allocation type 1.
    • 0 bit if only resource allocation type 0 is configured;
    • 1 bit otherwise.
- Modulation and coding scheme - 5 bits
- New data indicator - 1 bit
- Redundancy version - 2 bits
- HARQ process number - 4 bits
- 1st downlink assignment index - 1 or 2 bits
    • 1 bit for semi-static HARQ-ACK codebook;
    • 2 bits for dynamic HARQ-ACK codebook with single HARQ-ACK codebook.
- 2nd downlink assignment index - 0 or 2 bits
    • 2 bits for dynamic HARQ-ACK codebook with two HARQ-ACK sub-codebooks;
    • 0 bit otherwise.
- TPC command for scheduled PUSCH - 2 bits

$$- \left\lceil \log_2\left(\sum_{k=1}^{L_{max}} \binom{N_{SRS}}{k}\right)\right\rceil \text{ or } \left\lceil \log_2(N_{SRS})\right\rceil$$

- SRS resource indicator bits

(continued)

$$\left\lceil \log_2 \left( \sum_{k=1}^{L_{max}} \binom{N_{SRS}}{k} \right) \right\rceil$$

   • bits for non-codebook based PUSCH transmission;

   • $\left\lceil \log_2 (N_{SRS}) \right\rceil$ bits for codebook based PUSCH transmission.

- Precoding information and number of layers-up to 6 bits
- Antenna ports - up to 5 bits
- SRS request - 2 bits
- CSI request - 0, 1, 2, 3, 4, 5, or 6 bits
- CBG(code block group) transmission information - 0, 2, 4, 6, or 8 bits
- PTRS(phase tracking reference signal)-DMRS(demodulation reference signal) association - 0 or 2 bits.
- beta_offset indicator - 0 or 2 bits
- DMRS sequence initialization - 0 or 1 bit

DCI format 1_0 may be used for the fallback DCI that schedules a PDSCH, in which case the CRC may be scrambled by a C-RNTI. The DCI format 1_0 with the CRC scrambled by the C-RNTI may include, for example, information in Table 6 below.

[Table 6]

- Identifier for DCI formats - [1] bit
- Frequency domain resource assignment - $\left\lceil \log_2 ( N_{RB}^{DL,BWP}(N_{RB}^{DL,BWP} + 1)/2) \right\rceil$ bits
- Time domain resource assignment - X bits
- VRB-to-PRB mapping - 1 bit.
- Modulation and coding scheme - 5 bits
- New data indicator - 1 bit
- Redundancy version - 2 bits
- HARQ process number - 4 bits
- Downlink assignment index - 2 bits
- TPC command for scheduled PUCCH - [2] bits
- PUCCH(physical uplink control channel) resource indicator - 3 bits
- PDSCH-to-HARQ feedback timing indicator - [3] bits

DCI format 1_1 may be used for the non-fallback DCI that schedules a PDSCH, in which case the CRC may be scrambled by a C-RNTI. The DCI format 1_1 with the CRC scrambled by the C-RNTI may include, for example, information in the following Table 7.

[Table 7]

- Carrier indicator - 0 or 3 bits
- Identifier for DCI formats - [1] bits
- Bandwidth part indicator - 0, 1 or 2 bits
- Frequency domain resource assignment

   • For resource allocation type 0, $\left\lceil N_{RB}^{DL,BWP} / P \right\rceil$ bits

   • For resource allocation type 1, $\left\lceil \log_2 ( N_{RB}^{DL,BWP} (N_{RB}^{DL,BWP} + 1)/2) \right\rceil$ bits

- Time domain resource assignment -1, 2, 3, or 4 bits
- VRB-to-PRB mapping - 0 or 1 bit, only for resource allocation type 1.

   • 0 bit if only resource allocation type 0 is configured;

(continued)

> • 1 bit otherwise.
> - PRB(physical resource block) bundling size indicator - 0 or 1 bit
> - Rate matching indicator - 0, 1, or 2 bits
> - ZP CSI-RS(zero power channel state information reference signal) trigger - 0, 1, or 2 bits
> For transport block 1 :
> - Modulation and coding scheme - 5 bits
> - New data indicator - 1 bit
> - Redundancy version - 2 bits
> For transport block 2 :
> - Modulation and coding scheme - 5 bits
> - New data indicator - 1 bit
> - Redundancy version - 2 bits
> - HARQ process number - 4 bits
> - Downlink assignment index - 0 or 2 or 4 bits
> - TPC command for scheduled PUCCH - 2 bits
> - PUCCH resource indicator - 3 bits
> - PDSCH-to-HARQ_feedback timing indicator - 3 bits
> - Antenna ports - 4, 5 or 6 bits
> - Transmission configuration indication - 0 or 3 bits
> - SRS request - 2 bits
> - CBG transmission information - 0, 2, 4, 6, or 8 bits
> - CBG(code block group) flushing out information - 0 or 1 bit
> - DMRS sequence initialization - 1 bit

[PDCCH: CORESET, REG, CCE, Search Space]

A DL control channel in a 5G communication system will now be described in detail with reference to related drawings.

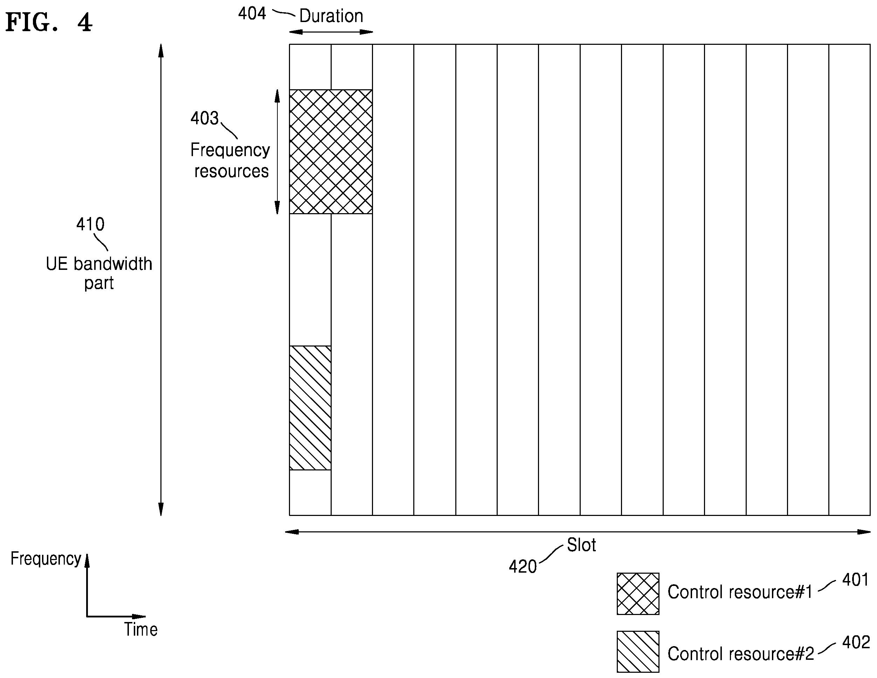

FIG. 4 shows an example of control resource sets (or CORESETs) in which a DL control channel is transmitted in the 5G wireless communication system. FIG. 4 shows an example in which two control resource sets (control resource set #1 401 and control resource set #2 402) are configured in a UE BWP 410 on a frequency axis and in one slot 420 on a time axis. The control resource sets 401 and 402 may be configured in a particular frequency resource 403 within the entire UE BWP 410 on the frequency axis. The control resource sets 401 and 402 may be configured with one or a plurality of OFDM symbols, which may be defined as a control resource set duration 404. Referring to the example of FIG. 4, the control resource set #1 401 may be configured with a control resource set duration of 2 symbols, and the control resource set #2 402 may be configured with a control resource set duration of 1 symbol.

As described above, in 5G, a control resource set may be configured by the BS for the UE through higher layer signaling, e.g., SI, MIB, or RRC signaling. Configuring the UE with a control resource set means providing the UE with information such as a control resource set ID, a frequency location of the control resource set, a symbol length of the control resource set, etc. For example, information in Table 8 may be included.

[Table 8]

```
ControlResourceSet ::=              SEQUENCE {

   -- Corresponds to L1 parameter 'CORESET-ID'


   controlResourceSetId             ControlResourceSetId,
   (control region Identity)
   frequencyDomainResources       BIT STRING (SIZE (45)),
   (frequency domain resource allocation information)
   duration                         INTEGER (1..maxCoReSetDuration),
   (time domain resource allocation information)
   cce-REG-MappingType             CHOICE {
   (CCE-to-REG mapping type)
         interleaved                      SEQUENCE {


            reg-BundleSize                   ENUMERATED {n2, n3, n6},
            (REG bundle size)


            precoderGranularity              ENUMERATED {sameAsREG-bundle,
allContiguousRBs},


            interleaverSize                  ENUMERATED {n2, n3, n6}
            (Interleaver size)


            shiftIndex                       INTEGER(0..maxNrofPhysicalResourceBlocks-1)
```

```
                                      OPTIONAL
            (Interleaver shift)
         },
         nonInterleaved                   NULL
         },
   tci-StatesPDCCH                 SEQUENCE(SIZE (1..maxNrofTCI-StatesPDCCH)) OF TCI-
StateId                                 OPTIONAL,
   (QCL configuration information)
   tci-PresentInDCI                ENUMERATED {enabled}
                                      OPTIONAL,      -- Need S
}
```

In Table 8, tci-StatesPDCCH (hereinafter, referred to as a transmission configuration indication (TCI) state) configuration information may include information about one or more SS/PBCH block indexes having the quasi co-location (QCL) relationship with the DMRS transmitted in the corresponding control resource set or channel state information reference signal (CSI-RS) indexes.

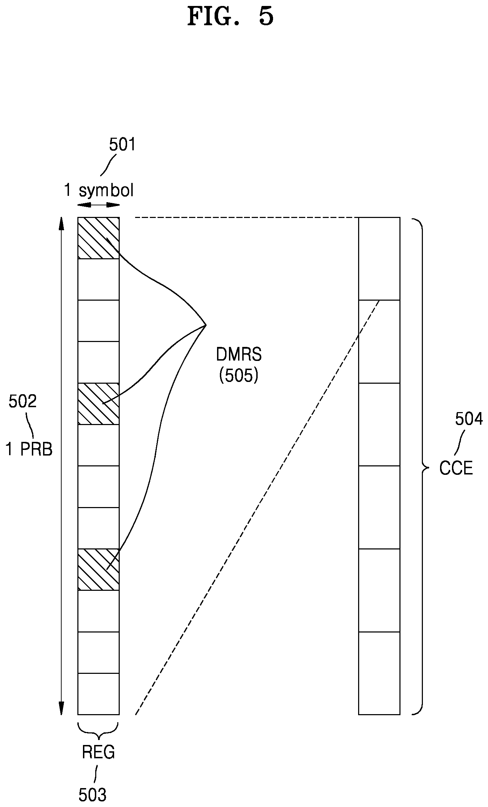

FIG. 5 illustrates an example of a basic unit of time and frequency resource that forms a DL control channel to be used in 5G. Referring to FIG. 5, a basic unit of time and frequency resource that forms a control channel is referred to as a resource element group (REG) 503, and the REG 503 may be defined by one OFDM symbol 501 on the time axis and one PRB 502, i.e., 12 subcarriers on the frequency axis. The BS may configure a DL control channel allocation unit by connecting REGs 503.

In FIG. 5, when the DL control channel allocation unit is called a control channel element (CCE) 504 in 5G, one CCE 504 may include a plurality of REGs 503. For example, as shown in FIG. 5, the REG 503 may include 12 REs, and when one CCE 504 includes 6 REGs 503, the one CCE 504 may include 72 REs. When the DL control resource set is configured, it may include a plurality of CCEs 504, and a particular DL control channel may be transmitted by being mapped to one or more CCEs 504 based on an aggregation level (or AL) in the control resource set. The CCEs 504 in the control resource set may be distinguished by numbers, which may be allocated to the CCEs 504 in a logical mapping method.

A basic unit of the DL control channel shown in FIG. 5, i.e., the REG 503, may all include REs to which DCI is mapped and a region to which a DMRS 505, which is a reference signal for decoding the REs, is mapped. As shown in FIG. 5, three DMRSs 505 may be transmitted in one REG 503. The number of CCEs required to transmit the PDCCH may be 1, 2, 4, 8, or 16 depending on the AL, and different numbers of CCEs may be used to implement link adaptation of the DL control channel. For example, when AL=L, a single DL control channel may be transmitted in L CCEs. The UE needs to detect a signal without knowing information about the DL control channel, and search space representing a set of CCEs is defined for the blind decoding. The search space is a set of DL control channel candidates that include CCEs on which the UE needs to attempt to decode at a given AL, and the UE may have a plurality of search spaces because there are various ALs each making a bundle with 1, 2, 4, 8, or 16 CCEs. A search space set may be defined as a set of search spaces at all configured ALs.

The search spaces may be classified into common search spaces and UE-specific search spaces. A certain group of UEs or all the UEs may monitor a common search space of the PDCCH to dynamically schedule the system information or receive cell-common control information, such as a paging message. For example, PDSCH scheduling allocation information for transmitting a SIB including cell operator information or the like may be received by monitoring the common search space of the PDCCH. For the common search space, a certain group of UEs or all the UEs need to receive the PDCCH, so the common search space may be defined as a set of pre-agreed CCEs. The scheduling allocation information for a UE-specific PDSCH or PUSCH may be received by monitoring a UE-specific PDCCH search space. The UE-specific search space may be defined in a UE-specific manner, based on the identity of the UE and a function of various system parameters.

In 5G, parameters for a PDCCH search space may be configured for the UE by the BS via higher layer signaling (e.g., SIB, MIB, RRC signaling). For example, the BS may configure the UE with the number of PDCCH candidates at each AL L, a monitoring periodicity for a search space, monitoring occasions in symbols within slots for the search space, a search space type (a common search space or a UE-specific search space), a combination of DCI format and RNTI to be monitored in the search space, and an index of a control resource set in which the search space is to be monitored. For example, the parameters may include information in Table 9.

[Table 9]

```
SearchSpace ::=                          SEQUENCE {
    -- Identity of the search space. SearchSpaceId = 0
    identifies the SearchSpace configured via PBCH (MIB) or ServingCellConfigCommon.
    searchSpaceId                        SearchSpaceId,
    (Search space identity)
    controlResourceSetId                 ControlResourceSetId,
    (control region Identity)
    monitoringSlotPeriodicityAndOffset   CHOICE {
    (Monitoring slot level periodicity)
            sl1                              NULL,
            sl2                              INTEGER (0..1),
            sl4                              INTEGER (0..3),
            sl5                              INTEGER (0..4),
            sl8                              INTEGER (0..7),
            sl10                             INTEGER (0..9),
            sl16                             INTEGER (0..15),
            sl20                             INTEGER (0..19)
    }
                                         OPTIONAL,
    duration (Monitoring duration)       INTEGER (2..2559)
    monitoringSymbolsWithinSlot          BIT STRING (SIZE (14))
                                                         OPTIONAL,
    (Monitoring symbols within slot)
    nrofCandidates                       SEQUENCE {
    (Number of PDCCH candidates at each aggregation level)
            aggregationLevel1                ENUMERATED {n0, n1, n2, n3, n4, n5, n6, n8},
            aggregationLevel2                ENUMERATED {n0, n1, n2, n3, n4, n5, n6, n8},
            aggregationLevel4                ENUMERATED {n0, n1, n2, n3, n4, n5, n6, n8},
            aggregationLevel8                ENUMERATED {n0, n1, n2, n3, n4, n5, n6, n8},
            aggregationLevel16               ENUMERATED {n0, n1, n2, n3, n4, n5, n6, n8}
    },

    searchSpaceType                      CHOICE {
```

```
(Search space type)

-- Configures this search space as common search space (CSS) and DCI formats to monitor.

        common                              SEQUENCE {

    (Common search space)

        }

        ue-Specific                         SEQUENCE {

    (UE-specific search space)

        -- Indicates whether the UE monitors in this USS for DCI formats 0-0 and 1-0 or for formats 0-1

        and 1-1.

            formats                          ENUMERATED  {formats0-0-And-1-0,

        formats0-1-And-1-1},

                ...

        }
```

Depending on the configuration information, the BS may configure the UE with one or more search space sets. According to some embodiments, the BS may configure the UE with search space set 1 and search space set 2, configure the UE to monitor DCI format A, scrambled by X-RNTI in the search space set 1, in the common search space, and monitor DCI format B, scrambled by Y-RNTI in the search space set 2, in the UE-specific search space.

According to the configuration information, one or a plurality of search space sets may exist in the common search space or the UE-specific search space. For example, search space set #1 and search space set #2 may be configured as the common search space, and search space set #3 and search space set #4 may be configured as the UE-specific search space.

The following combinations of DCI formats and RNTIs may be monitored in the common search space. However, the combinations are not limited to an example set forth below.

- DCI format 0_0/1_0 with CRC scrambled by C-RNTI, CS-RNTI, SP-CSI-RNTI, RA-RNTI, TC-RNTI, P-RNTI, SI-RNTI
- DCI format 2_0 with CRC scrambled by SFI-RNTI
- DCI format 2_1 with CRC scrambled by INT-RNTI
- DCI format 2_2 with CRC scrambled by TPC-PUSCH-RNTI, TPC-PUCCH-RNTI
- DCI format 2_3 with CRC scrambled by TPC-SRS-RNTI

The following combinations of DCI formats and RNTIs may be monitored in the user-specific search space. However, the combinations are not limited to an example set forth below.

- DCI format 0_0/1_0 with CRC scrambled by C-RNTI, CS-RNTI, TC-RNTI
- DCI format 1_0/1_1 with CRC scrambled by C-RNTI, CS-RNTI, TC-RNTI

The RNTIs specified above may comply with the following definitions and uses.

Cell RNTI (C-RNTI): used for scheduling a UE-specific PDSCH
Temporary Cell RNTI (TC-RNTI): used for scheduling a UE-specific PDSCH.
Configured Scheduling RNTI (CS-RNTI): used for scheduling a semi-statically configured UE-specific PDSCH
Random Access RNTI (RA-RANTI): used for scheduling a PDSCH during a random access process
Paging RNTI (P-RNTI): used for scheduling a PDSCH on which paging is transmitted
System Information RNTI (SI-RNTI): used for scheduling a PDSCH on which SI is transmitted
Interruption RNTI (INT-RNTI): used for notifying whether to puncture a PDSCH
Transmit Power Control for PUSCH RNTI (TPC-PUSCH-RNTI): used for indicating a power control command for a PUSCH
Transmit Power Control for PUCCH RNTI (TPC-PUCCH-RNTI): used for indicating a power control command for a physical UL control channel (PUCCH)
Transmit Power Control for sounding reference signal RNTI (TPC-SRS-RNTI): used for indicating a power control command for an SRS

The DCI formats specified above may conform to definitions as set forth in an example of Table 10 below.

[Table 10]

| DCI format | Usage |
|---|---|
| 0_0 | Scheduling of PUSCH in one cell |
| 0_1 | Scheduling of PUSCH in one cell |
| 1_0 | Scheduling of PDSCH in one cell |
| 1_1 | Scheduling of PDSCH in one cell |
| 2_0 | Notifying a group of UEs of the slot format |
| 2_1 | Notifying a group of UEs of the PRB(s) and OFDM symbol(s) where UE may assume no transmission is intended for the UE |
| 2_2 | Transmission of TPC commands for PUCCH and PUSCH |
| 2_3 | Transmission of a group of TPC commands for SRS transmissions by one or more UEs |

In 5G, a search space at an aggregation level L in a control resource set p and a search space set s may be expressed as in Equation (1) below:

[Equation 1]

$$L \cdot \left\{ \left( Y_{p,n_{s,f}^{\mu}} + \left\lfloor \frac{m_{s,n_{CI}} \cdot N_{CCE,p}}{L \cdot M_{s,max}^{(L)}} \right\rfloor + n_{CI} \right) mod \left\lfloor \frac{N_{CCE,p}}{L} \right\rfloor \right\} + i$$

$L$: aggregation level (AL)

$n_{CI}$: carrier index

$N_{CCE,p}$: total number of CCEs existing in control resource set p

$n_{s,f}^{\mu}$ : slot index

$M_{s,max}^{(L)}$ the number of PDCCH candidates at aggregation level L

$m_{s,n_{CI}} = 0, \ldots, M_{s,max}^{(L)} - 1$ : indices of PDCCH candidates at aggregation level L

$$i = 0, \ldots, L - 1$$

$Y_{p,n_{s,f}^{\mu}} = \left( A_p \cdot Y_{p,n_{s,f}^{\mu}-1} \right) mod D$, $Y_{p,-1} = n_{RNTI} \neq 0, A_p = 39827$ *for pmod3 = 0, $A_p$ = 39829 for pmod3 = 1, $A_p$ = 39839*

*for pmod3 = 2, D = 65537*

$n_{RNTI}$: UE identifier

A value of $Y_{p,n_{s,f}^{\mu}}$ may correspond to 0 for common search space.

The value of $Y_{p,n_{s,f}^{\mu}}$ may correspond to a value changed according to an identity of the UE Identity (C-RNTI or ID configured for the UE by the BS) and time index for the UE-specific search space.

As it is possible to configure a plurality of search space sets with different parameters (e.g., the parameters in Table 9) in 5G, the UE may monitor a different search space set at each time point. For example, when the search space set #1 is configured with X-slot periodicity and the search space set #2 is configured with Y-slot periodicity, where X and Y are different, the UE may monitor both the search space set #1 and the search space set #2 in a particular slot, and monitor one of the search space set #1 and the search space set #2 in another particular slot.

[PDCCH: BD/CCE limit]

When a plurality of search space sets are configured for the UE, the following conditions may be taken into account in a method for determining a search space set to be monitored by the UE.

When the UE is configured with a value of monitoringCapabilityConfig-r16, which is higher layer signaling, as r15monitoringcapability, the UE defines maximum values of the number of PDCCH candidates to be monitored and the number of CCEs that make up the entire search space (the term entire search space refers to an entire CCE set corresponding to a union region of a plurality of search space sets) for each slot, and when the UE is configured with a value of monitoringCapabilityConfig-r16 as r16monitoringcapability, the UE defines maximum values of the number of PDCCH candidates to be monitored and the number of CCEs that make up the entire search space for each span.

[Condition 1: restriction on the maximum number of PDCCH candidates]

The maximum number $M^\mu$ of PDCCH candidates to be monitored by the UE may follow Table 11 below when defined on a slot basis and follow Table 12 when defined on a span basis in a cell configured with SCS of $15 \cdot 2^\mu$ kHz, depending on the configuration value of higher layer signaling as described above.

[Table 11]

| $\mu$ | Maximum number of PDCCH candidates per slot and per serving cell ($M^\mu$) |
|---|---|
| 0 | 44 |
| 1 | 36 |
| 2 | 22 |
| 3 | 20 |

[Table 12]

| | Maximum number $M^\mu$ of monitored PDCCH candidates per span for combination (X,Y) and per serving cell | | |
|---|---|---|---|
| $\mu$ | (2,2) | (4,3) | (7,3) |
| 0 | 14 | 28 | 44 |
| 1 | 12 | 24 | 36 |

[Condition 2: restriction on the maximum number of CCEs]

The maximum number $C^\mu$ of CCEs that make up the entire search space (the term entire search space refers to an entire CCE set corresponding to a union region of a plurality of search space sets) may follow Table 13 when defined on a slot basis and follow Table 14 when defined on a span basis in a cell configured with SCS of $15 \cdot 2^\mu$ kHz, depending on the configuration value of higher layer signaling as described above.

[Table 13]

| $\mu$ | Maximum number of non-overlapped CCEs per slot and per serving cell ($C^\mu$) |
|---|---|
| 0 | 56 |
| 1 | 56 |
| 2 | 48 |
| 3 | 32 |

[Table 14]

| | Maximum number $C^\mu$ of non-overlapped CCEs per span for combination (X,Y) and per serving cell | | |
|---|---|---|---|
| $\mu$ | (2,2) | (4,3) | (7,3) |
| 0 | 18 | 36 | 56 |

(continued)

| | Maximum number $C^\mu$ of non-overlapped CCEs per span for combination (X,Y) and per serving cell | | |
|---|---|---|---|
| $\mu$ | (2,2) | (4,3) | (7,3) |
| 1 | 18 | 36 | 56 |

For convenience of explanation, a situation that satisfies both conditions 1 and 2 at a particular time is defined as "condition A". Accordingly, failing to satisfy the condition A may mean that at least one of the conditions 1 and 2 is not satisfied.

[Rate matching/Puncturing]

Hereinafter, rate matching and puncturing operations is described in detail.

When time and frequency resource A in which to transmit arbitrary symbol sequence A overlaps with time and frequency resource B, rate matching or puncturing operation may be considered for transmission and reception operations in a channel A in consideration of resource C corresponding to an overlapping region between the resource A and resource B. The specific operations may be as follows.

Rate matching operation

The BS may transmit the symbol sequence A by mapping the channel A only to the remaining resource region excluding resource C corresponding to a region overlapping with the resource B from the entire resource A in which to transmit the symbol sequence A to the UE. For example, when the symbol sequence A includes {symbol #1, symbol #2, symbol #3, and symbol #4}, the resource A includes {resource #1, resource #2, resource #3, and resource #4} and the resource B includes {resource #3 and resource #5}, the BS may transmit the symbol sequence A by sequentially mapping the symbol sequence A to {resource #1, resource #2, and resource #4}, which are the remaining resources excluding {resource #3} corresponding to the resource C from the resource A. As a result, the BS may transmit the symbol sequence {symbol #1, symbol #2, and symbol #3} by respectively mapping them to {resource #1, resource #2, and resource #4}.

The UE may determine the resource A and the resource B from scheduling information for the symbol sequence A from the BS, and thus determine the resource C corresponding to an overlapping region between the resource A and the resource B. The UE may receive the symbol sequence A on the assumption that the symbol sequence A is transmitted by being mapped to the remaining region excluding the resource C from the entire resource A. For example, when the symbol sequence A includes {symbol #1, symbol #2, symbol #3, and symbol #4}, the resource A includes {resource #1, resource #2, resource #3, and resource #4} and the resource B includes {resource #3 and resource #5}, the UE may receive the symbol sequence A on the assumption that the symbol sequence A is sequentially mapped to {resource #1, resource #2, and resource #4}, which are the remaining resources excluding {resource #3} corresponding to the resource C from the resource A. As a result, the UE may assume that the symbol sequence {symbol #1, symbol #2, and symbol #3} is transmitted by being mapped to {resource #1, resource #2, and resource #4}, respectively, and perform a series of subsequent reception operations.

Puncturing operation

When there is the resource C corresponding to a region overlapping with the resource B in the entire resource A in which to transmit the symbol sequence A to the UE, the BS may map the symbol sequence A to the entire resource A but may perform transmission only in the remaining resource region excluding the resource C from the resource A without performing transmission in the resource region corresponding to the resource C. For example, when the symbol sequence A includes {symbol #1, symbol #2, symbol #3, and symbol #4}, the resource A includes {resource #1, resource #2, resource #3, and resource #4} and the resource B includes {resource #3 and resource #5}, the BS may respectively map the symbol sequence A {symbol #1, symbol #2, symbol #3, and symbol #4} to the resource A {resource #1, resource #2, resource #3 and resource #4}, transmit only a symbol sequence {symbol #1, symbol #2, and symbol #4} corresponding to {resource #1, resource #2, and resource #4} which are the remaining resources excluding {resource #3} corresponding to the resource C from the resource A, and not transmit {symbol #3} mapped to {resource #3} corresponding to the resource C. As a result, the BS may transmit the symbol sequence {symbol #1, symbol #2, and symbol #4} by respectively mapping them to {resource #1, resource #2, and resource #4}.

The UE may determine the resource A and the resource B from scheduling information for the symbol sequence A from the BS, and thus determine the resource C corresponding to an overlapping region between the resource A and the resource B. The UE may receive the symbol sequence A on the assumption that the symbol sequence A is mapped to the entire resource A but transmitted only in the remaining region excluding the resource C from the entire resource A. For example, when the symbol sequence A includes {symbol #1, symbol #2, symbol #3, and symbol #4}, the resource A includes {resource #1, resource #2, resource #3, and resource #4} and the resource B includes {resource #3 and resource #5}, the UE may perform reception while assuming that the symbol sequence A {symbol #1, symbol #2, symbol #3, and symbol #4} are respectively mapped to the resource A {resource #1, resource #2, resource #3, and resource #4}, but {symbol #3} mapped to {resource #3} corresponding to the resource C is not transmitted, and the symbol sequence {symbol #1, symbol #2, and symbol #4} is transmitted by being mapped to {resource #1, resource #2, and resource #4} which are the remaining resources excluding {symbol #3} corresponding to the resource C from the resource A. As a result, the UE may assume that the symbol sequence {symbol #1, symbol #2, and symbol #4} is transmitted by being mapped to {resource #1, resource #2, and resource #4}, respectively, and perform a series of subsequent reception operations.

A method of configuring a rate matching resource for the purpose of rate matching in a 5G communication system is described. Rate matching refers to adjusting a size of a signal by taking into account the amount of resources available for transmission of the signal. For example, rate matching of a data channel may refer to adjusting a size of data by not transmitting the data channel by not mapping it to a particular time and frequency resource region.

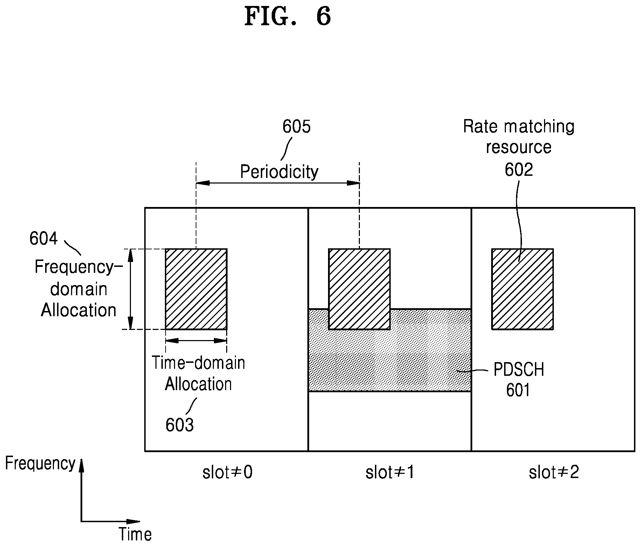

FIG. 6 is a diagram for describing a method by which a BS and a UE transmit and receive data by considering a DL data channel and a rate matching resource, according to an embodiment of the disclosure.

In FIG. 6, a DL data channel (PDSCH) 601 and a rate matching resource 602 are shown. The BS may configure the UE with one or more rate matching resources 602 through higher layer signaling (e.g., RRC signaling). Configuration information for the rate matching resource 602 may include time domain resource allocation information 603, frequency domain resource allocation information 604, and periodicity information 605. In the following description, a bitmap corresponding to the frequency domain resource allocation information 604 is referred to as a "first bitmap", a bitmap corresponding to the time domain resource allocation information 603 is referred to as a "second bitmap", and a bitmap corresponding to the periodicity information 605 is referred to as a "third bitmap". When all or some of time and frequency resources of the scheduled data channel 601 overlap with the configured rate matching resource 602, the BS may transmit the data channel 601 by rate matching the data channel 601 in a portion of the rate matching resource 602, and the UE may assume that the data channel 601 is rate matched in the portion of the rate matching resource 602 and then receive and decode the data channel 601.

Through additional configuration, the BS may dynamically notify the UE whether to perform rate matching on the data channel in the portion of the configured rate matching resource via DCI (corresponding to the "rate matching indicator" in the DCI format as described above). Specifically, the BS may select some of the configured rate matching resources and group them into a rate matching resource group, and indicate to the UE whether to perform rate matching on the data channel for each rate matching resource group via DCI in a bitmap form. For example, when there are four rate matching resources configured, e.g., RMR#1, RMR#2, RMR#3, and RMR#4, the BS may configure RMG#1={RMR#1, RMR#2} and RMG#2={RMR#3, RMR#4} as rate matching groups, and indicate to the UE whether to perform rate matching in each of RMG#1 and RMG#2 via a bitmap by using two bits in a DCI field. For example, it may be indicated by "1" when the rate matching should be performed, and "0" when the rate matching should not be performed.

5G supports "RB symbol level granularity" and "RE level granularity" for a method of configuring the UE with the rate matching resource. Specifically, the configuration method is as follows.

RB symbol level

The UE may be configured with up to four RateMatchPatterns for each BWP by higher layer signaling, and one RateMatchPattern may include the following:

- As a reserved resource in a BWP, a resource in which time and frequency resource region of the reserved resource is configured with a combination of a symbol level bitmap and an RB level bitmap on the frequency axis may be included. The reserved resource may span one or two slots. A time-domain pattern (periodicityAndPattern) in which the time and frequency domains composed of a pair of RB-level and symbol-level bitmaps are repeated may be additionally configured.
- A time and frequency domain resource region configured as a CORESET in a BWP and a resource region corresponding to a time-domain pattern configured with a search space configuration in which the time and frequency domain resource region is repeated may be included.

RE level

The UE may be configured with the following through higher layer signaling.

- Configuration information (lte-CRS-ToMatchAround) for an RE corresponding to an LTE cell-specific reference signal or common reference signal (CRS) pattern, which may include the number of LTE CRS ports (nrofCRS-Ports), an LTE-CRS-vshift(s) value (v-shift), center subcarrier location information (carrierFreqDL) of an LTE carrier from a reference frequency point (e.g., reference point A), bandwidth size information (carrierBandwidthDL) of the LTE carrier, subframe configuration information (mbsfn-SubframConfigList) corresponding to a multicast-broadcast single-frequency network (MBSFN). The UE may determine a location of a CRS in an NR slot corresponding to an LTE subframe based on the aforementioned information.

- Configuration information about a resource set corresponding to one or multiple zero power (ZP) CSI-RSs in a BWP.

[PDSCH/PUSCH: time resource allocation]

Hereinafter, a method of allocating time domain resources for a data channel in a next-generation mobile communication system (5G or NR system) will be described.

The BS may configure the UE with a table of time domain resource allocation information for a DL data channel (PDSCH) and a UL data channel (PUSCH) via higher layer signaling (e.g., RRC signaling). A table including a maximum of 16 entries (maxNrofDL-Allocations=16) may be configured for a PDSCH, and a table including a maximum of 16 entries (maxNrofUL-Allocations=16) may be configured for a PUSCH. In an embodiment, the time domain resource allocation information may include a PDCCH-to-PDSCH slot timing (corresponding to a time interval in slots between a time point when a PDCCH is received and a time point when a PDSCH scheduled by the received PDCCH is transmitted, denoted by K0), a PDCCH-to-PUSCH slot timing (corresponding to a time interval in slots between a time point when a PDCCH is received and a time point when a PUSCH scheduled by the received PDCCH is transmitted, denoted by K2), information about a location of a start symbol and the length of the symbols where the PDSCH or the PUSCH is scheduled within a slot, a mapping type of the PDSCH or PUSCH, etc. For example, information as in Table 15 or Table 16 below may be transmitted from the BS to the UE.

[Table 15]

| ***PDSCH-TimeDomainResourceAllocationList* information element** |
|---|
| `PDSCH-TimeDomainResourceAllocationList ::=  SEQUENCE (SIZE(1..maxNrofDL-Allocations))`<br>`OF PDSCH-TimeDomainResourceAllocation`<br><br>`PDSCH-TimeDomainResourceAllocation ::=   SEQUENCE {` |

| | | | |
|---|---|---|---|
| `k0` | `INTEGER(0..32)` | `OPTIONAL,` | `-- Need S` |
| `(PDCCH-to-PDSCH timing, by slot)` | | | |
| `mappingType` | `ENUMERATED {typeA, typeB},` | | |
| `(PDSCH mapping type)` | | | |
| `startSymbolAndLength` | `INTEGER (0..127)` | | |
| `(Start symbol and length of PDSCH)` | | | |
| `}` | | | |

[Table 16]

**PUSCH-TimeDomainResourceAllocation information element**

```
PUSCH-TimeDomainResourceAllocationList ::=  SEQUENCE (SIZE(1..maxNrofUL-Allocations))
OF PUSCH-TimeDomainResourceAllocation


PUSCH-TimeDomainResourceAllocation ::=  SEQUENCE {
  k2                          INTEGER(0..32)              OPTIONAL,   -- Need S
  (PDCCH-to-PUSCH timing, by slot)
  mappingType                 ENUMERATED {typeA, typeB},
  (PUSCH mapping type)
  startSymbolAndLength        INTEGER (0..127)
  (Start symbol and length of PUSCH)
}
```

The BS may notify the UE of one of the entries in the table of the time domain resource allocation information via L1 signaling (e.g., DCI) (e.g., indicated by a 'time domain resource allocation' field in the DCI). The UE may obtain the time domain resource allocation information for the PDSCH or PUSCH based on the DCI received from the BS.

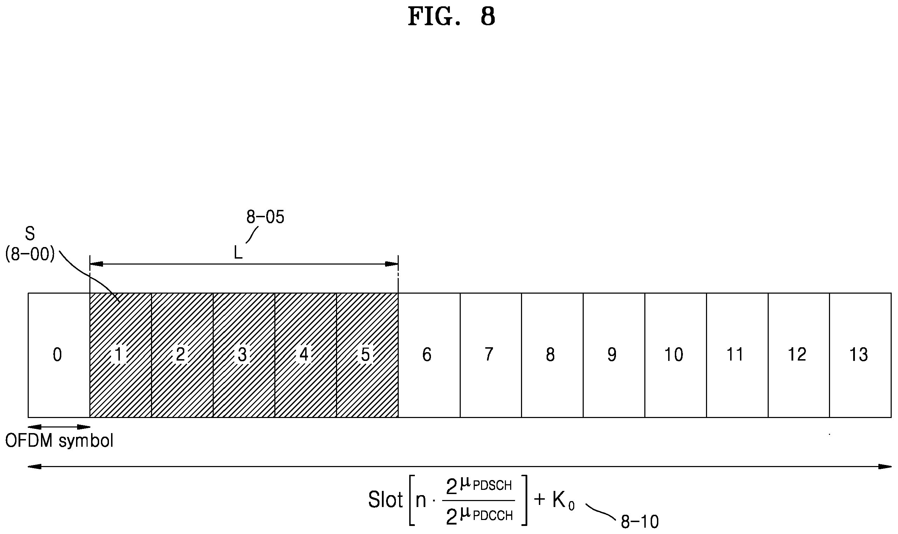

FIG. 8 illustrates an example of time domain resource allocation of a PDSCH in a wireless communication system, according to an embodiment of the disclosure.

Referring to FIG. 8, the BS may indicate a position of a PDSCH resource on the time axis, based on SCSs ($\mu_{PDSCH}$, $\mu_{PDCCH}$) of a data channel and a control channel, which are configured using a higher layer, a scheduling offset value K0, and a starting position 8-00 and length 8-05 of OFDM symbols in a slot dynamically indicated in DCI.

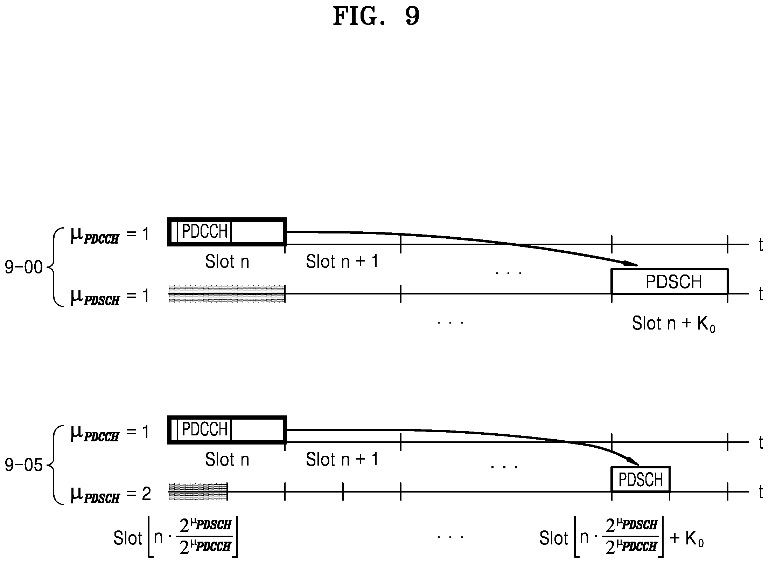

FIG. 9 illustrates an example of time domain resource allocation based on SCSs of a data channel and a control channel in a wireless communication system, according to an embodiment of the disclosure.

Referring to FIG. 9, when the data channel and the control channel have the same SCS ($\mu_{PDSCH} = \mu_{PDCCH}$) (9-00), slot numbers are the same for data and control, so the BS and the UE may generate a scheduling offset to match the predetermined slot offset K0. On the other hand, when the data channel and the control channel have different SCSs ($\mu_{PDSCH} \neq \mu_{PDCCH}$) (9-05), slot numbers are different for data and control, so the BS and the UE may generate a scheduling offset to match the predetermined slot offset K0, based on a SCS of a PDCCH.

[PDSCH: frequency resource allocation]

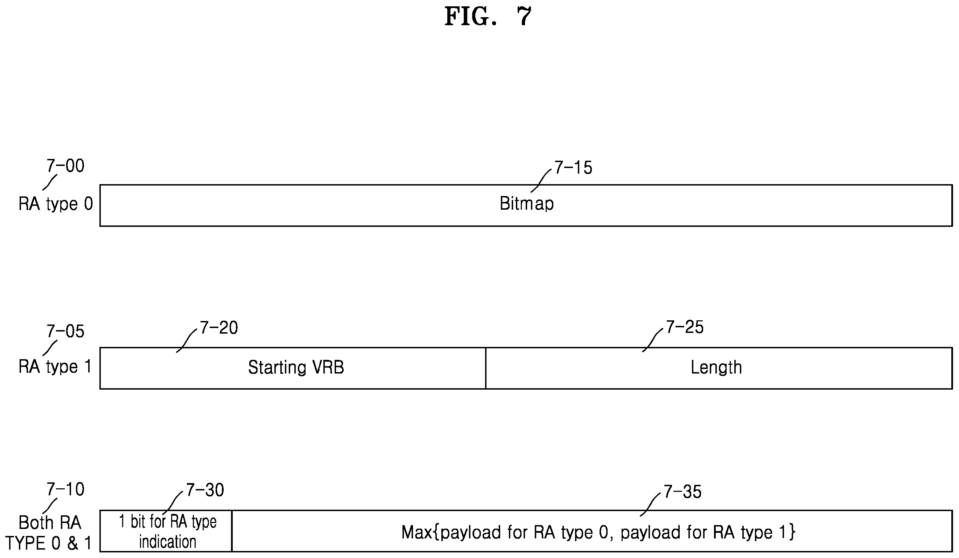

FIG. 7 illustrates an example of frequency domain resource allocation for a PDSCH in a wireless communication system, according to an embodiment of the disclosure.

FIG. 7 shows three frequency domain resource allocation methods, which are type 0 7-00, type 1 7-05, and dynamic switch 7-10, which are configurable through a higher layer in the NR wireless communication system.

Referring to FIG. 7, when the UE is configured to use only resource type 0 via higher layer signaling (7-00), some DCI for allocating the PDSCH for the UE includes a bitmap composed of NRBG bits. Conditions for this will be described below. In this case, the NRGB refers to the number of resource block groups (RBGs) determined according to a size of a BWP allocated by an BWP indicator and a higher layer parameter rbg-Size as shown in the following Table 17, and data is transmitted in an RBG indicated as 1 in a bitmap.

[Table 17]

| Bandwidth Part Size | Configuration 1 | Configuration 2 |
|---|---|---|
| 1 - 36 | 2 | 4 |
| 37 - 72 | 4 | 8 |
| 73 - 144 | 8 | 16 |
| 145 - 275 | 16 | 16 |

When the UE is configured to use only resource type 1 via higher layer signaling (7-05), some DCI for allocating a PDSCH for the UE includes frequency domain resource allocation information composed of $\left\lceil \log_2 (N_{RB}^{DL,BWP} (N_{RB}^{DL,BWP} +1)/2 \right\rceil$ bits. Conditions for this will be described below. This may allow the BS to configure a starting VRB 7-20 and a length 7-25 of frequency domain resources consecutively allocated from the starting VRB 7-20.

When the UE is configured to use both the resource type 0 and the resource type 1 through higher layer signaling (7-10), some DCI for allocating a PDSCH for the UE includes frequency domain resource allocation information composed of bits 7-35 corresponding to a larger one of a payload 7-15 for configuring the resource type 0 and a payload 7-20 and 7-25 for configuring the resource type 1. Conditions for this are described below. In this case, one bit may be added to the most significant bit (MSB) of the frequency domain allocation information in the DCI, and when the bit has a value of '0', it indicates that the resource type 0 is used, and when the bit has a value of '1', it indicates that the resource type 1 is used.

[PDSCH: VRB-to-PRB mapping]

In the resource allocation type-1 (resource type 1) described above, a non-interleaved mapping method or an interleaved mapping method may be applied depending on a method of mapping between a VRB and a PRB (VRB-to-PRB mapping).

In the non-interleaved mapping method, an n-th VRB may be mapped directly to an n-th PRB without interleaving. However, for a PDSCH scheduled with a DCI format 1_0 transmitted in a common search space, the n-th VRB may be mapped o $n + N_{start}^{CORESET}$ -th PRB. Here, $N_{start}^{CORESET}$ may correspond to the lowest PRB index of a control resource set (CORESET) in which the corresponding DCI was received.

In the interleaved mapping method, an n-th VRB may be mapped to a f(n)-th PRB through interleaving. Here, f(.) may correspond to an interleaving function. In this case, an interleaving operation may be performed in units of RB bundles each consisting of L RBs. A specific interleaved VRB-to-PRB mapping procedure may be performed according to operations described below.

[Table 18]

- Resource block bundles are defined as

    - for PDSCH transmissions scheduled with DCI format 1_0 with the CRC scrambled by SI-RNTI in Type0-PDCCH common search space in CORESET 0, the set of $N_{\text{BWP,init}}^{\text{size}}$ resource blocks in CORESET 0 are divided into $N_{\text{bundle}} = \lceil N_{\text{BWP,init}}^{\text{size}}/L \rceil$ resource-block bundles in increasing order of

the resource-block number and bundle number where $L = 2$ is the bundle size and $N_{\text{BWP,init}}^{\text{size}}$ is the size of CORESET 0.

- resource block bundle $N_{\text{bundle}}$ - 1 consists of $N_{\text{BWP,init}}^{\text{size}} \bmod L$ resource blocks if $N_{\text{BWP,init}}^{\text{size}} \bmod L > 0$ and $L$ resource blocks otherwise,

- all other resource block bundles consists of L resource blocks.

    - for PDSCH transmissions scheduled with DCI format 1_0 in any common search space in bandwidth part $i$ with starting position $N_{\text{BWP},i}^{\text{start}}$, other than Type0-PDCCH common search space in CORESET 0, the set of $N_{\text{BWP,init}}^{\text{size}}$ virtual resource blocks $\{0,1,\ldots,N_{\text{BWP,init}}^{\text{size}} - 1\}$, where $N_{\text{BWP,init}}^{\text{size}}$ is the size of CORESET 0 if CORESET 0 is configured for the cell and the size of initial downlink bandwidth part if CORESET 0 is not configured for the cell, are divided into $N_{\text{bundle}}$ virtual resource-block bundles in increasing order of the virtual resource-block number and virtual bundle number and the set of $N_{\text{BWP,init}}^{\text{size}}$ physical resource blocks $\{N_{\text{start}}^{\text{CORESET}}, N_{\text{start}}^{\text{CORESET}} + 1, \ldots, N_{\text{start}}^{\text{CORESET}} + N_{\text{BWP,init}}^{\text{size}} - 1\}$ are divided into $N_{\text{bundle}}$ physical resource-block bundles in increasing order of the physical resource-block number and physical bundle number, where

$$N_{\text{bundle}} =$$

$$\lceil (N_{\text{BWP,init}}^{\text{size}} + (N_{\text{BWP},i}^{\text{start}} + N_{\text{start}}^{\text{CORESET}}) \bmod L)/L \rceil$$ , $L = 2$ is the bundle size, and $N_{\text{start}}^{\text{CORESET}}$ is

the lowest-numbered physical resource block in the control resource set where the corresponding DCI was received.

- resource block bundle 0 consists of $L - ((N_{\text{BWP},i}^{\text{start}} + N_{\text{start}}^{\text{CORESET}}) \bmod L)$ resource blocks,

- resource block bundle $N_{\text{bundle}}$ - 1 consists of $(N_{\text{BWP,init}}^{\text{size}} + N_{\text{BWP},i}^{\text{start}} + N_{\text{start}}^{\text{CORESET}}) \bmod L$ resource blocks if $(N_{\text{BWP,init}}^{\text{size}} + N_{\text{BWP},i}^{\text{start}} + N_{\text{start}}^{\text{CORESET}}) \bmod L > 0$ and $L$ resource blocks otherwise,

- all other resource block bundles consists of $L$ resource blocks.

(continued)

- for all other PDSCH transmissions, the set of $N_{\text{BWP},i}^{\text{size}}$ resource blocks in bandwidth part $i$ with starting position $N_{\text{BWP},i}^{\text{start}}$ are divided into

$$N_{\text{bundle}} = \left\lceil \left( N_{\text{BWP},i}^{\text{size}} + \left( N_{\text{BWP},i}^{\text{start}} \bmod L_i \right) \right) / L_i \right\rceil$$ resource-block bundles in increasing order of the resource-block number and bundle number where $L_i$ is the bundle size for bandwidth part $i$ provided by the higher-layer parameter *vrb-ToPRB-Interleaver and*

- resource block bundle 0 consists of $L_i - \left( N_{\text{BWP},i}^{\text{start}} \bmod L_i \right)$ resource blocks,

- resource block bundle $N_{\text{bundle}}$ - 1 consists of $\left( N_{\text{BWP},i}^{\text{start}} + N_{\text{BWP},i}^{\text{size}} \right) \bmod L_i$ resource blocks if $\left( N_{\text{BWP},i}^{\text{start}} + N_{\text{BWP},i}^{\text{size}} \right) \bmod L_i > 0$ and $L_i$ resource blocks otherwise,

- all other resource block bundles consists of $L_i$ resource blocks.

- Virtual resource blocks in the interval $j \in \{0,1,..., N_{\text{bundle}} - 1\}$ are mapped to physical resource blocks according to

- virtual resource block bundle $N_{\text{bundle}}$ - 1 is mapped to physical resource block bundle $N_{\text{bundle}}$ - 1

- virtual resource block bundle $j \in \{0,1,..., N_{\text{bundle}} - 2\}$ is mapped to physical resource block bundle $f(j)$ where

$$f(j) = rC + c$$

$$j = cR + r$$

$$r = 0,1,...,R - 1$$

$$c = 0,1,...,C - 1$$

$$R = 2$$

$$C = \lfloor N_{\text{bundle}} / R \rfloor$$

- The UE is not expected to be configured with $L_i = 2$ simultaneously with a PRG size of 4 as defined in [6, TS 38.214]

In the above-described interleaved mapping method, the UE may assume that the same precoding is applied within one PRB bundle.

According to the content of Table 18 described above, a PDSCH scheduled with the DCI format 1_0 in the common search space may be allocated frequency domain resources starting from a PRB ( $N_{start}^{CORESET}$ )having the lowest index of CORESET where the corresponding DCI format 1_0 is transmitted.

The UE may receive, via DCI (e.g., DCI format 1_0 and DCI format 1_1), an indication of whether the VRB-to-PRB mapping method is non-interleaved mapping or interleaved mapping. In case that the VRB-to-PRB mapping method is not indicated, the UE may assume non-interleaved mapping. A VRB-to-PRB mapping indicator field in the DCI format may follow the content of Table 19 below.

[Table 19]

| Bit field mapped to index | VRB-to-PRB mapping |
|---|---|
| 0 | Non-interleaved |
| 1 | Interleaved |

As described above, the PDSCH scheduled with the DCI format 1_0 transmitted in the common search space may be transmitted by being mapped to a region corresponding to a total of $N_{BWP,init}^{SIZE}$ PRBs, starting from a PRB start having the lowest index in a CORESET where the corresponding DCI format 1_0 is transmitted within an active BWP, i.e., a frequency axis resource region corresponding to $N_{BWP,init}^{SIZE}$ PRBs ( $\{N_{start}^{CORESET}, N_{start}^{CORESET} + 1, ..., N_{start}^{CORESET} + N_{BWP,init}^{SIZE} - 1\}$ is defined as follows. If CORESET #0 is configured, then $N_{BWP,init}^{SIZE}$ may correspond to the size of CORESET #0 (i.e., the number of frequency axis RBs constituting the CORESET #0), and if the CORESET #0 is not configured, then $N_{BWP,init}^{SIZE}$ may correspond to the size of an initial BWP (i.e., the number of frequency domain RBs constituting the initial BWP).).

According to the content of Table 18 above, a unit in which the PDSCH scheduled with the DCI format 1_0 (i.e., DCI format 1_0 with the CRC scrambled by SI-RNTI in a Type 0 PDCCH common search space in the CORESET #0) is mapped to the frequency domain may be a RB bundle unit. When the CORESET #0 is configured for the UE, the number of RB bundles may be defined as $N_{bundle} = \lceil N_{BWP,init}^{Size}/L \rceil$. In this case, the RB bundles are arranged in increasing order of the RB bundle index, a bundle size L may be 2, and the size ( $N_{BWP,init}^{Size}$ ) of the transmission frequency domain may be the size of the CORESET #0. In case that a relationship $N_{BWP,init}^{Size} mod L$ between the size of RB bundle and the size of the configured CORESET #0 is greater than 0, the last index $N_{bundle}$ - 1 of an RB bundle may consist of $N_{BWP,init}^{Size} mod L$ RBs so that all RB resources may be included in a bundle unit (i.e., bundles with indices other than the last index all consist of L RBs, but the bundle with the last index may consist of $N_{BWP,init}^{Size} mod L$ RBs).

According to the content of Table 18 described above, a unit in which a PDSCH scheduled with DCI format 1_0 transmitted in a common search space (i.e., DCI format 1_0 transmitted in the common search space within an i-th BWP (i-th BWP with a starting position $N_{BWP,i}^{Size}$ ) is mapped to the frequency domain may be an RB bundle unit. The number of RB bundle units of the UE may be defined as $N_{bundle} = \lceil (N_{BWP,init}^{Size} + (N_{BWP,i}^{start} + N_{start}^{CORESET}) mod L)/L \rceil$. As described above, $N_{BWP,init}^{Size}$ may be the size of the BWP, $N_{start}^{CORESET}$ may represent the lowest RB index of the CORESET, $N_{BWP,i}^{start}$ may be a start RB index of the BWP, and L may represent a bundle size. In this case, the bundle size L may be 2. The RB bundles are virtual RB bundles with indices arranged in increasing order, and may be mapped to a region corresponding to physical RBs $\{N_{start}^{CORESET}, N_{start}^{CORESET} + 1, ..., N_{start}^{CORESET} + N_{BWP,init}^{SIZE} - 1\}$ and indices of physical RB bundles arranged in increasing order. In case that $(N_{BWP,init}^{Size} + N_{BWP,i}^{start} + N_{start}^{CORESET}) mod L$, which is a condition of the number of RBs included in the last index of the RB bundle, the last index $N_{bundle}$ - 1 of the RB bundle may consist of

$(\mathrm{N}_{BWP,init}^{Size} + N_{BWP,i}^{start} + N_{start}^{CORESET}) \mathrm{mod} L$ RBs so that all RB resources may be included in the RB bundle unit. In this case, the number of RBs included in a first index of an RB bundle may be $L - (N_{BWP,i}^{start} + N_{start}^{CORESET}) \mathrm{mod} L$.

According to the content of Table 18 described above, a PDSCH that is generally scheduled (i.e., not a PDSCH scheduled with the DCI format 1_0 in the common search space) may be transmitted by being mapped to a region corresponding to a total of $\mathrm{N}_{BWP,i}^{Size}$ (wherein $\mathrm{N}_{BWP,i}^{Size}$ is the size of active BWP), starting from an RB $\mathrm{N}_{BWP,i}^{start}$ having the lowest index in the active BWP. In this case, a unit mapped to the frequency domain may be an RB bundle unit. The number of RB bundle units for the PDSCH transmission may be a total of $N_{bundle}$ according to Table 18 above, and may be defined as $\mathrm{N}_{bundle} = \left\lceil (N_{BWP,i}^{size} + (N_{BWP,i}^{start} \mathrm{mod} L_i)/L_i) \right\rceil$. In this case, $L_i$ is an RB bundle size within the active BWP i, and may be configured via a higher layer configuration parameter vrb-ToPRB-Interleaver according to Table 20.

The RB bundle may be a unit that constitutes a VRB, and the number of RBs included in the first index and/or the last index of RB bundle may be less than the configured RB bundle size $L_i$. Thus, the first index of the RB bundle may consist of $L_i - (N_{BWP,i}^{start} \mathrm{mod} L_i)$ RBs. The RB bundle with the last index may be determined by the number of RBs $(N_{BWP,i}^{start} + N_{BWP,i}^{size}) \mathrm{mod} L_i$ that it consist of. In this case, the condition may be $(N_{BWP,i}^{start} + N_{BWP,i}^{size}) \mathrm{mod} L_i > 0$. Except for the RB bundles of the first and last indices described above, other RB bundles may consist of the configured $L_i$ RBs.

A VRB index ($j \in \{0,1, ..., N_{bundle} - 1\}$) configured as the RB bundle may be mapped to PRBs in the manner described in Table 18. In this case, the VRB index $j \in \{0,1, ... , N_{bundle} - 2\}$ may be mapped to a PRB index via a function of $f(j) = rC + c$ $(j = cR + r, r = 0,1 ... R - 1, c = 0,1, ... , C - 1, R = 2, C = \lfloor N_{bundle}/R \rfloor)$. In this case, the last VRB index $j = N_{bundle} - 1$ may be mapped to a PRB index $N_{bundle} - 1$. The reason for mapping the last VRB index to the PRB as it is to prevent overlapping with other indices that may occur when using the f(j) function.

[Table 20]

```
                    PDSCH-Config


-- ASN1START
-- TAG-PDSCH-CONFIG-START

PDSCH-Config ::=                     SEQUENCE {
    dataScramblingIdentityPDSCH          INTEGER(0..1023)                    OPTIONAL,  -- Need S
    dmrs-DownlinkForPDSCH-MappingTypeA   SetupRelease { DMRS-DownlinkConfig }  OPTIONAL,  -- Need M
    dmrs-DownlinkForPDSCH-MappingTypeB   SetupRelease { DMRS-DownlinkConfig }  OPTIONAL,  -- Need M

    tci-StatesToAddModList               SEQUENCE (SIZE(1..maxNrofTCI-States)) OF TCI-State  OPTIONAL,  --
Need N
    tci-StatesToReleaseList              SEQUENCE (SIZE(1..maxNrofTCI-States)) OF TCI-StateId  OPTIONAL,  --
Need N
    vrb-ToPRB-Interleaver                ENUMERATED {n2, n4}                                      OPTIONAL,
-- Need S
    resourceAllocation                   ENUMERATED { resourceAllocationType0, resourceAllocationType1,
dynamicSwitch},
    pdsch-TimeDomainAllocationList        SetupRelease { PDSCH-TimeDomainResourceAllocationList }
OPTIONAL,  -- Need M
    pdsch-AggregationFactor              ENUMERATED { n2, n4, n8 }
OPTIONAL,  -- Need S
    rateMatchPatternToAddModList         SEQUENCE (SIZE (1..maxNrofRateMatchPatterns)) OF RateMatchPattern
OPTIONAL,  -- Need N
    rateMatchPatternToReleaseList        SEQUENCE (SIZE (1..maxNrofRateMatchPatterns)) OF RateMatchPatternId
OPTIONAL,  -- Need N
    rateMatchPatternGroup1               RateMatchPatternGroup
OPTIONAL,  -- Need R
    rateMatchPatternGroup2               RateMatchPatternGroup
OPTIONAL,  -- Need R

    rbg-Size                             ENUMERATED {config1, config2},
    mcs-Table                            ENUMERATED {qam256, qam64LowSE}         OPTIONAL,  -- Need S
    maxNrofCodeWordsScheduledByDCI        ENUMERATED {n1, n2}
OPTIONAL,  -- Need R

    prb-BundlingType                     CHOICE {
        staticBundling                       SEQUENCE {
            bundleSize                           ENUMERATED { n4, wideband }        OPTIONAL   -- Need S
        },
        dynamicBundling                      SEQUENCE {
            bundleSizeSet1                       ENUMERATED { n4, wideband, n2-wideband, n4-wideband }
OPTIONAL,  -- Need S
            bundleSizeSet2                       ENUMERATED { n4, wideband }        OPTIONAL   -- Need S
        }
    },
    zp-CSI-RS-ResourceToAddModList               SEQUENCE (SIZE (1..maxNrofZP-CSI-RS-Resources)) OF ZP-CSI-
RS-Resource
                                                 OPTIONAL,  -- Need N
    zp-CSI-RS-ResourceToReleaseList              SEQUENCE (SIZE (1..maxNrofZP-CSI-RS-Resources)) OF ZP-CSI-RS-
ResourceId
```

```
                                                        OPTIONAL,  -- Need N
  aperiodic-ZP-CSI-RS-ResourceSetsToAddModList  SEQUENCE (SIZE (1..maxNrofZP-CSI-RS-ResourceSets)) OF ZP-
CSI-RS-ResourceSet
                                                        OPTIONAL,  -- Need N
  aperiodic-ZP-CSI-RS-ResourceSetsToReleaseList SEQUENCE (SIZE (1..maxNrofZP-CSI-RS-ResourceSets)) OF ZP-
CSI-RS-ResourceSetId
                                                        OPTIONAL,  -- Need N
  sp-ZP-CSI-RS-ResourceSetsToAddModList  SEQUENCE (SIZE (1..maxNrofZP-CSI-RS-ResourceSets)) OF ZP-CSI-RS-
ResourceSet
                                                        OPTIONAL,  -- Need N
  sp-ZP-CSI-RS-ResourceSetsToReleaseList  SEQUENCE (SIZE (1..maxNrofZP-CSI-RS-ResourceSets)) OF ZP-CSI-RS-
ResourceSetId
                                                        OPTIONAL,  -- Need N
  p-ZP-CSI-RS-ResourceSet            SetupRelease { ZP-CSI-RS-ResourceSet }
                                                        OPTIONAL,  -- Need M
    ...
}


RateMatchPatternGroup ::=        SEQUENCE (SIZE (1..maxNrofRateMatchPatternsPerGroup)) OF CHOICE {
  cellLevel                RateMatchPatternId,
  bwpLevel                 RateMatchPatternId
}


-- TAG-PDSCH-CONFIG-STOP
-- ASN1STOP
```

[PUSCH: transmission scheme]

Next, a PUSCH transmission scheduling scheme is described. A PUSCH transmission may be dynamically scheduled by a UL grant in DCI, or operated by configured grant Type 1 or Type 2. Dynamic scheduling indication for the PUSCH transmission may be indicated by DCI format 0_0 or DCT format 0_1.

A configured grant Type 1 PUSCH transmissions may be semi-statically configured not by receiving a UL grant in DCI but by receiving configuredGrantConfig including rrc-ConfiguredUplinkGrant of Table 21 via higher layer signaling. A configured grant Type 2 PUSCH transmission may be semi-persistently scheduled by a UL grant in DCI after reception of configuredGrantConfig that does not include rrc-ConfiguredUplinkGrant of Table 21 via higher layer signaling. When the PUSCH transmission is operated by a configured grant, parameters applied to the PUSCH transmission are applied through higher layer signaling configuredGrantConfig of Table 21, except for dataScramblingIdentityPUSCH, txConfig, codebookSubset, maxRank, and scaling of UCI-OnPUSCH which are provided by higher layer signaling pusch-Config of Table 22. When the UE is provided with transformPrecoder in higher layer signaling configuredGrantConfig of Table 21, the UE applies tp-pi2BPSK in pusch-Config of Table 22 for the PUSCH transmission operated by the configured grant.

[Table 21]

```
ConfiguredGrantConfig ::=              SEQUENCE {
        frequencyHopping                    ENUMERATED {intraSlot, interSlot}
OPTIONAL,     -- Need S,
        cg-DMRS-Configuration              DMRS-UplinkConfig,
        mcs-Table                          ENUMERATED {qam256, qam64LowSE}
OPTIONAL,     -- Need S
        mcs-TableTransformPrecoder         ENUMERATED {qam256, qam64LowSE}
OPTIONAL,     -- Need S
        uci-OnPUSCH                        SetupRelease { CG-UCI-OnPUSCH }
OPTIONAL,     -- Need M
        resourceAllocation                 ENUMERATED { resourceAllocationType0,
resourceAllocationType1, dynamicSwitch },
        rbg-Size                           ENUMERATED {config2}
OPTIONAL,     -- Need S
        powerControlLoopToUse              ENUMERATED {n0, n1},
        p0-PUSCH-Alpha                     P0-PUSCH-AlphaSetId,
        transformPrecoder                  ENUMERATED {enabled, disabled}
OPTIONAL,     -- Need S
        nrofHARQ-Processes                 INTEGER(1..16),
        repK                               ENUMERATED {n1, n2, n4, n8},
        repK-RV                            ENUMERATED {s1-0231, s2-0303, s3-0000}
OPTIONAL,     -- Need R
        periodicity                        ENUMERATED {
                                              sym2, sym7, sym1x14, sym2x14, sym4x14,
sym5x14, sym8x14, sym10x14, sym16x14, sym20x14,
                                              sym32x14, sym40x14, sym64x14, sym80x14,
sym128x14, sym160x14, sym256x14, sym320x14, sym512x14,
                                              sym640x14, sym1024x14, sym1280x14,
sym2560x14, sym5120x14,
                                              sym6, sym1x12, sym2x12, sym4x12,
sym5x12, sym8x12, sym10x12, sym16x12, sym20x12, sym32x12,
                                              sym40x12, sym64x12, sym80x12,
sym128x12, sym160x12, sym256x12, sym320x12, sym512x12, sym640x12,
                                              sym1280x12, sym2560x12
        },
        configuredGrantTimer               INTEGER (1..64)
OPTIONAL,     -- Need R
        rrc-ConfiguredUplinkGrant          SEQUENCE {
            timeDomainOffset                   INTEGER (0..5119),
```

```
        timeDomainAllocation              INTEGER    (0..15),
        frequencyDomainAllocation         BIT STRING (SIZE(18)),
        antennaPort                       INTEGER (0..31),
        dmrs-SeqInitialization            INTEGER (0..1)
OPTIONAL,    -- Need R
        precodingAndNumberOfLayers            INTEGER (0..63),
        srs-ResourceIndicator             INTEGER (0..15)
OPTIONAL,    -- Need R
        mcsAndTBS                             INTEGER (0..31),
        frequencyHoppingOffset            INTEGER (1..
maxNrofPhysicalResourceBlocks-1)             OPTIONAL,    -- Need R
        pathlossReferenceIndex            INTEGER (0..maxNrofPUSCH-
PathlossReferenceRSs-1),
        ...
    }
OPTIONAL,    -- Need R
    ...
}
```

Next, a PUSCH transmission method is described. A DMRS antenna port for a PUSCH transmission is the same as an antenna port for an SRS transmission. The PUSCH transmission may follow a codebook based transmission method or a non-codebook based transmission method depending on whether a value of txConfig in higher layer signaling pusch-Config of Table 22 is 'codebook' or 'nonCodebook'.

As described above, the PUSCH transmission may be dynamically scheduled by DCI format 0_0 or 0_1, or may be semi-statically configured by a configured grant. When the UE receives an indication of scheduling for the PUSCH transmission via the DCI format 0_0, the UE performs beam configuration for the PUSCH transmission by using pucch-spatialRelationInfoID corresponding to a UE-specific PUCCH resource corresponding to a lowest ID in an active UL BWP in a serving cell, in which case the PUSCH transmission is based on a single antenna port. The UE does not expect scheduling for the PUSCH transmission via the DCI format 0_0 in a BWP in which a PUCCH resource including pucch-spatialRelationInfo is not configured. When the UE is not configured with txConfig in the pusch-Config of Table 22, the UE does not expect to be scheduled by DCI format 0_1.

[Table 22]

```
PUSCH-Config ::=                                 SEQUENCE {
      dataScramblingIdentityPUSCH                  INTEGER (0..1023)
OPTIONAL,      -- Need S
      txConfig                                     ENUMERATED {codebook, nonCodebook}
OPTIONAL,      -- Need S
      dmrs-UplinkForPUSCH-MappingTypeA             SetupRelease { DMRS-UplinkConfig }
OPTIONAL,      -- Need M
      dmrs-UplinkForPUSCH-MappingTypeB             SetupRelease { DMRS-UplinkConfig }
OPTIONAL,      -- Need M


      pusch-PowerControl                           PUSCH-PowerControl
OPTIONAL,      -- Need M
      frequencyHopping                             ENUMERATED {intraSlot, interSlot}
OPTIONAL,      -- Need S
      frequencyHoppingOffsetLists                  SEQUENCE (SIZE (1..4)) OF INTEGER (1..
maxNrofPhysicalResourceBlocks-1)


OPTIONAL,      -- Need M
      resourceAllocation                           ENUMERATED { resourceAllocationType0,
resourceAllocationType1, dynamicSwitch},
      pusch-TimeDomainAllocationList              SetupRelease { PUSCH-
TimeDomainResourceAllocationList }              OPTIONAL,      -- Need M
      pusch-AggregationFactor                      ENUMERATED { n2, n4, n8 }
OPTIONAL,      -- Need S
      mcs-Table                                    ENUMERATED {qam256, qam64LowSE}
OPTIONAL,      -- Need S
      mcs-TableTransformPrecoder                   ENUMERATED {qam256, qam64LowSE}
OPTIONAL,      -- Need S
      transformPrecoder                            ENUMERATED {enabled, disabled}
OPTIONAL,      -- Need S
      codebookSubset                               ENUMERATED {fullyAndPartialAndNonCoherent,
partialAndNonCoherent,nonCoherent}


OPTIONAL, -- Cond codebookBased
      maxRank                                      INTEGER (1..4)
OPTIONAL, -- Cond codebookBased
      rbg-Size                                     ENUMERATED { config2}
OPTIONAL, -- Need S
      uci-OnPUSCH                                  SetupRelease { UCI-OnPUSCH}
OPTIONAL, -- Need M
      tp-pi2BPSK                                   ENUMERATED {enabled}
OPTIONAL, -- Need S
      ...
```

```
}
```

Next, a codebook based PUSCH transmission is described. The codebook based PUSCH transmission may be dynamically scheduled by DCI format 0_0 or 0_1, or semi-statically operated by a configured grant. When the codebook based PUSCH transmission is dynamically scheduled by the DCI format 0_1 or semi-statically configured by the configured grant, the UE determines a precoder for the PUSCH transmission based on an SRS resource indicator (SRI), a transmission precoding matrix indicator (TPMI), and a transmission rank (the number of PUSCH transmission layers).

In this case, the SRI may be given by an SRS resource indicator field in DCI, or configured via higher layer signaling srs-ResourceIndicator. Upon the codebook based PUSCH transmission, the UE may be configured with at least one SRS resource and up to two SRS resources. When the UE is provided with the SRI via the DCI, an SRS resource indicated by the SRI refers to an SRS resource corresponding to the SRI among SRS resources transmitted before a PDCCH including the SRI. Furthermore, the TPMI and the transmission rank may be given by a precoding information and number of layers field in the DCI, or configured via higher layer signaling precodingAndNumberOfLayers. The TPMI is used to indicate the precoder to be applied for the PUSCH transmission. When the UE is configured with one SRS resource, the TPMI is used to indicate the precoder to be applied in the configured one SRS resource. When the UE is configured with a plurality of SRS resources, the TPMI is used to indicate the precoder to be applied in the SRS resource indicated by the SRI.

The precoder to be used for the PUSCH transmission is selected from a UL codebook having the same number of antenna ports as a value of nrofSRS-Ports in higher layer signaling SRS-Config. In the codebook based PUSCH transmission, the UE determines a codebook subset based on the TPMI and codebookSubset in higher layer signaling pusch-Config. The codebookSubset in the higher layer signaling pusch-Config may be configured with one of 'fullyAndPartialAndNonCoherent', 'partialAndNonCoherent', and 'nonCoherent' based on a UE capability reported by the UE to the BS. When the UE reports 'partialAndNonCoherent' as the UE capability, the UE does not expect that a value of the higher layer signaling codebookSubset is set to 'fullyAndPartialAndNonCoherent'. When the UE reports 'nonCoherent' as the UE capability, the UE does not expect that the value of the higher layer signaling codebookSubset is set to 'fullyAndPartialAndNonCoherent' or 'partialAndNonCoherent'. When nrofSRS-Ports in higher layer signaling SRS-ResourceSet indicates two SRS antenna ports, the UE does not expect that the value of the higher layer signaling codebookSubset is set to 'partialAndNonCoherent'.

The UE may be configured with one SRS resource set with a value of usage in higher layer signaling SRS-ResourceSet set to 'codebook', and one SRS resource in the SRS resource set may be indicated by the SRI. When multiple SRS resources are configured in the SRS resource set with the value of the usage in higher layer signaling SRS-ResourceSet set to 'codebook', the UE expects that nrofSRS-Ports in higher layer signaling SRS-Resource is set to the same value for all the SRS resources.

The UE transmits, to the BS, one or a plurality of SRS resources included in the SRS resource set with a value of the usage set to 'codebook' according to higher layer signaling, and the BS selects one of the SRS resources transmitted by the UE and indicates that the UE is allowed to perform PUSCH transmission by using transmit beam information of the SRS resource. In this case, for the codebook based PUSCH transmission, the SRI is used as information for selecting an index of the one SRS resource and is included in DCI. Additionally, the BS may include, in the DCI, information indicating the TPMI and the rank to be used by the UE for PUSCH transmission. By using the SRS resource indicated by the SR, the UE perform the PUSCH transmission by applying the precoder indicated by the rank and the TPMI indicated based on the transmit beam for the SRS resource.

Next, non-codebook based PUSCH transmission is described. The non-codebook based PUSCH transmission may be dynamically scheduled by DCI format 0_0 or 0_1, or operate semi-statically via a configured grant. When at least one SRS resource is configured in an SRS resource set with a value of usage in higher layer signaling SRS-ResourceSet set to 'nonCodebook', the UE may be scheduled for non-codebook based PUSCH transmission by the DCI format 0_1.

For the SRS resource set with a value of the usage in higher layer signaling SRS-ResourceSet set to 'nonCodebook', the UE may be configured with one associated non-zero power (NZP) CSI-RS resource. The UE may perform calculation on a precoder for SRS transmission by measuring a NZP CSI-RS resource associated with the SRS resource set. When a gap between a last symbol of reception of an aperiodic NZP CSI-RS resource associated with the SRS resource set and a first symbol of an aperiodic SRS transmission from the UE is less than 42 symbols, the UE does not expect updating of information about the precoder for SRS transmission.

When a value of resourceType in higher layer signaling SRS-ResourceSet is set to 'aperiodic', the associated NZP CSI-RS is indicated via an SRS request field in DCI format 0_1 or 1_1. In this case, when the associated NZP CSI-RS resource is an aperiodic NZP CSI-RS resource, the presence of the associated NZP CSI-RS is indicated when a value of the SRS request field in DCI format 0_1 or 1_1 is not '00'. In this case, the DCI should not indicate cross carrier or cross BWP scheduling. Furthermore, when the value of the SRS request indicates the presence of the NZP CSI-RS, the NZP CSI-RS is located in a slot in which a PDCCH including the SRS request field is transmitted. In this case, TCI states in the scheduled subcarrier are not configured with QCL-TypeD.

When a periodic or semi-persistent SRS resource set is configured, an associated NZP CSI-RS may be indicated via associatedCSI-RS in higher layer signaling SRS-ResourceSet. For non-codebook based transmission, the UE does not expect to be configured with both spatialRelationInfo, which is higher layer signaling for an SRS resource, and the associatedCSI-RS in higher layer signaling SRS-ResourceSet.

When configured with a plurality of SRS resources, the UE may determine a precoder and a transmission rank to be applied for PUSCH transmission, based on the SRI indicated by the BS. In this case, the SRI may be indicated by the SRS resource indicator field in the DCI or configured by higher layer signaling srs-ResourceIndicator. Similar to the codebook based PUSCH transmission described above, when the UE is provided with the SRI via the DCI, an SRS resource indicated by the SRI refers to an SRS resource corresponding to the SRI from among SRS resources transmitted before the PDCCH including the SRI. The UE may use one or a plurality of SRS resources for SRS transmission, and a maximum number of SRS resources available for simultaneous transmission in the same symbol in a SRS resource set and the maximum number of SRS resources are determined by UE capability reported by the UE to the BS. In this case, the SRS resources transmitted simultaneously by the UE occupy the same RBs. The UE configures one SRS port for each SRS resource. Only one SRS resource set with a value of the usage in higher layer signaling SRS-ResourceSet set to 'nonCodebook' may be configured, and the maximum number of SRS resources that can be configured for non-codebook based PUSCH transmission is 4.

The BS transmits one NZP-CSI-RS associated with an SRS resource set to the UE, and the UE calculates a precoder to be used for transmission of one or more SRS resources in the SRS resource set based on a result of measurement during reception of the NZT-CSI-RS. The UE applies the calculated precoder when transmitting, to the BS, one or more SRS resources in the SRS resource set with the usage set to 'nonCodebook', and the BS selects one or a plurality of SRS resources from among the received one or plurality of SRS resources. In this case, for the non-codebook based PUSCH transmission, the SRI indicates an index that may represent one or a combination of a plurality of SRS resources, and the SRI is included in the DCI. The number of SRS resources indicated by the SRI transmitted from the BS may be the number of PUSCH transmission layers, and the UE transmits the PUSCH by applying the precoder applied for the SRS resource transmission to each layer.

[PUSCH: preparation procedure time]

Next, a PUSCH preparation procedure time is described. In case that the BS schedules the UE to transmit a PUSCH with DCI format 0_0, 0_1 or 0-2, the UE may need a PUSCH preparation procedure time to transmit the PUSCH by applying a transmission method (an SRS resource transmission precoding method, the number of transmission layers, or a spatial domain transmission filter) indicated via DCI. Taking this into account, NR has defined a PUSCH preparation procedure time. The PUSCH preparation procedure time of the UE may follow Equation 2 below.

[Equation 2]

$$T_{proc,2} = \max((N_2 + d_{2,1} + d_2)(2048 + 144)\kappa \, 2^{-\mu} \, T_c + T_{ext} + T_{switch}, \, d_{2,2})$$

Variables in $T_{proc,2}$ expressed via Equation 2 may have the following meanings:
- $N_2$: the number of symbols determined according to UE processing capability 1 or 2 depending on UE capability, and numerology $\mu$. It may have a value in Table 23 when the UE capability 1 is reported according to a UE capability report, and may have a value in Table 24 when the UE processing capability 2 is reported in the UE capability report and the UE processing capability 2 is configured as being enabled via higher layer signaling.

[Table 23]

| $\mu$ | PUSCH preparation time $N_2$ [symbols] |
|---|---|
| 0 | 10 |
| 1 | 12 |
| 2 | 23 |
| 3 | 36 |

[Table 24]

| $\mu$ | PUSCH preparation time $N_2$ [symbols] |
|---|---|
| 0 | 5 |
| 1 | 5.5 |
| 2 | 11 for frequency range 1 |

- $d_{2,1}$: the number of symbols determined as 0 when REs of the first OFDM symbol are all configured to consist of only DM-RS, or as 1 otherwise.

- $\kappa$:64

- Image: among Image andImage, it follows a value that makes Image larger. Imagedenotes numerology of a DL in which a PDCCH including DCI that schedules the PUSCH is transmitted, and Imagedenotes numerology of a UL in which the PUSCH is transmitted.

$$T_c:1/(\Delta f_{\max} * N_f), \Delta f_{\max}=480*10^3 Hz, N_f=4096$$

- $d_{2,2}$: It follows a BWP switching time when the DCI scheduling the PUSCH indicates BWP switching, or has '0' otherwise.

- $d_2$: When OFDM symbols of a PUCCH, a PUSCH with a high priority index, and a PUCCH with a low priority index overlap in time, a $d_2$ value of the PUSCH with the high priority index is used. Otherwise, $d_2$ is 0.

- $T_{ext}$: When the UE uses a shared spectrum channel access scheme, the UE may calculate $T_{ext}$ and apply it to the PUSCH preparation procedure time. Otherwise, $T_{ext}$ is assumed to be 0.

- $T_{switch}$: When a UL switching interval is triggered, $T_{switch}$ is assumed to be a switching interval time. Otherwise, $T_{switch}$ is assumed to be 0.

Considering time domain resource mapping information of the PUSCH scheduled via the DCI and the effect of UL-DL timing advance, the BS and the UE determine that the PUSCH preparation procedure time is not sufficient when the first symbol of the PUSCH starts earlier than the first UL symbol with its CP starting after Image from the last symbol of a PDCCH including the DCI that schedules the PUSCH. Otherwise, the BS and the UE determine that the PUSCH preparation procedure time is sufficient. The UE may transmit the PUSCH only when the PUSCH preparation procedure time is sufficient, and may ignore the DCI that schedules the PUSCH when the PUSCH preparation procedure time is not sufficient.

[SBFD: summary of SBFD]

Moreover, in the 3GPP, subband non-overlapping full duplex (SBFD) is being discussed as an NR-based new duplex scheme. The SBFD is a technology capable of expanding UL coverage of the UE by allowing the BS to receive UL transmissions from the UE by using a part of DL resource as a UL resource in the TDD spectrum of sub-6 GHz or above-6 GHz frequencies, and reducing feedback delay by receiving, from the UE, feedback for a DL transmission in the increased UL resources. In the disclosure, a UE capable of receiving information about whether the SBFD is supported from the BS and performing a UL transmission in a part of DL resource is referred to as an SBFD-capable UE. To define the SBFD scheme in the standard and in order for the SBFD-capable UE to determine that the SBFD is supported in a particular cell (or in a particular frequency or frequency band), the following methods may be considered.

In a first method, in addition to a frame structure type of the existing unpaired spectrum (or time division duplex (TDD)) or paired spectrum (or frequency division duplex (FDD)), another frame structure type (e.g., frame structure type 2) may be introduced to define the SBFD. The frame structure type 2 may be defined as being supported in the particular frequency or frequency band, or the BS may indicate to the UE whether the SBFD is supported via system information. The SBFD-capable UE may determine whether the SBFD is supported in the particular cell (or in the particular frequency or frequency band) by receiving the system information including whether the SBFD is supported.

In a second method, whether the SBFD is additionally supported in a particular frequency or frequency band of the existing unpaired spectrum (or TDD) may be indicated without defining a new frame structure type. In the second method, whether the SBFD is additionally supported in the particular frequency or frequency band of the existing unpaired spectrum may be defined, or the BS may indicate to the UE whether the SBFD is supported via system information. The SBFD-capable UE may determine whether the SBFD is supported in the particular cell (or in the particular frequency or frequency band) by receiving the system information including whether the SBFD is supported.

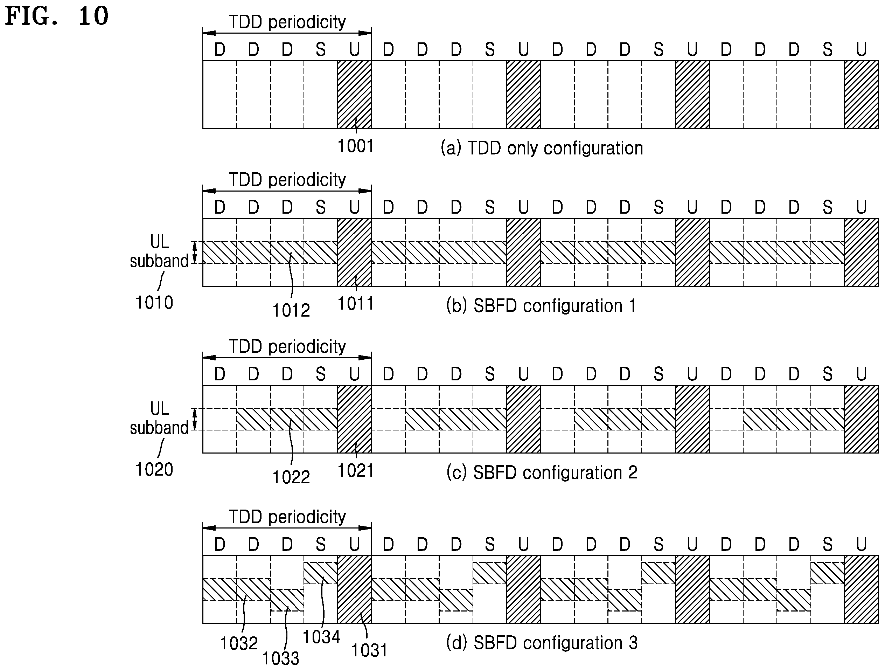

In the first and second methods, information about whether the SBFD is supported may be information that indirectly indicate whether the SBFD is supported (e.g., SBFD resource configuration information as described below in FIG. 10) by additionally configuring some of DL resources as UL resources in addition to configuration for TDD UL-DL resource configuration information indicating DL slot (or symbol) resources and UL slot (or symbol) resources in TDD, or it may be information that directly indicates whether the SBFD is supported.

FIG. 10 is a diagram illustrating SBFD resource configuration information of the disclosure.

As described above, the SBFD resource configuration information may be obtained by additionally configuring some of the DL resources as UL resources (FIG. 10 (b) to FIG. 10 (d)) in addition to configuration for TDD UL-DL resource configuration information indicating DL slot resources and UL slot resources in TDD. The UE may transmit a UL shared channel or control channel in the configured UL resources.

In the disclosure, the SBFD-capable UE may obtain a cell synchronization by receiving a synchronization signal block during initial cell access for connecting to a cell (or BS). A process of obtaining the cell synchronization may be the same for the SBFD-capable UE and the existing TDD UE. Thereafter, the SBFD-capable UE may determine whether the cell supports the SBFD through obtaining an MIB or an SIB or through a random access procedure.

The system information for transmitting information about whether the SBFD is supported may be system information that is differentiated from and transmitted separately from system information for a UE supporting a different version of standard in the cell (e.g., the existing TDD UE), and the SBFD-capable UE may determine whether the SBFD is supported by obtaining all or part of the system information transmitted separately from the system information for the existing TDD UE. When obtaining only the system information for the existing TDD UE or system information indicating that the SBFD is not supported, the SBFD-capable UE may determine that the cell (or BS) supports TDD only.

When the information about whether the SBFD is supported is included in the system information for the UE supporting the different version of standard (e.g., the existing TDD UE), the information about whether the SBFD is supported may be inserted at an end so as not to affect the obtaining of the system information for the existing TDD UE. When the SBFD-capable UE fails to obtain the information about whether the SBFD is supported, which is inserted at the end, or obtains information indicating that the SBFD is not supported, the SBFD-capable UE may determine that the cell (or BS) supports TDD only.

When the information about whether the SBFD is supported is included in the system information for the UE supporting the different version of standard (e.g., the existing TDD UE), the information about whether the SBFD is supported may be transmitted on a separate PDSCH so as not to affect the obtaining of the system information for the existing TDD UE. In other words, the UE not supporting the SBFD may receive a first SIB (or SIB1) including existing TDD related system information on a first PDSCH. The UE supporting the SBFD may receive the first SIB (or SIB) including the existing TDD related system information on the first PDSCH, and receive a second SIB including SBFD related system information on a second PDSCH. Here, the first PDSCH and the second PDSCH may be respectively scheduled by a first PDCCH and a second PDCCH, and CRCs of the first PDCCH and the second PDCCH may be scrambled by the same RNTI (e.g., an SI-RNTI). Control resource information (e.g., search space and/or CORESET information) for monitoring the second PDCCH may be obtained from the system information on the first PDSCH, but when it is not obtained (i.e., when the system information of the first PDSCH does not include information about the search space), the UE supporting the SBFD may receive the second PDCCH in the same search space as the search space of the first PDCCH.

As described above, when the SBFD-capable UE determines that the cell (or BS) supports TDD only, the SBFD-capable UE may perform a random access procedure and transmission and reception of data/control signals in the same manner as the existing TDD UE.

The BS may configure a separate random access resource for each of the existing TDD UE or the SBFD-capable UE (e.g., SBFD-capable UE that supports duplex communication and SBFD-capable UE supporting half-duplex communication), and transmit configuration information for the random access resource (control information or configuration information indicating time-frequency resources to be used for the PRACH) to the SBFD-capable UE via system information. The system information for transmitting the information about the random access resource may be system information that is differentiated from system information for a UE supporting a different version of standard (e.g., the existing TDD UE) within a cell and transmitted separately.

By configuring separate random access resources for the TDD UE supporting the different version of standard and the SBFD UE, the BS is able to differentiate whether the TDD UE supporting the different version of standard performs random access or the SBFD UE performs random access. For example, a separate random access resource configured for the SBFD-capable UE may be a resource that the existing TDD UE determines to be a DL time resource, and the SBFD-capable UE may perform random access via a UL resource (or a separate random access resource) configured at some frequencies of the DL time resource, so that the BS may determine that the UE that attempted the random access in the UL resource is the SBFD-capable UE.

Alternatively, the BS may not configure a separate random access resource for the SBFD-capable UE but instead configure a common random access resource for all UEs in the cell. In this case, configuration information for the random access resource may be transmitted to all the UEs in the cell via system information, and the SBFD-capable UE that has received the system information may perform random access by using the random access resource. Thereafter, the SBFD-capable UE may complete the random access procedure and proceed to an RRC access mode for transmitting and receiving data to and from the cell. After the RRC access mode, the SBFD-capable UE may receive, from the BS, a higher-layer or physical signal that can determine some frequency resources of the DL time resource are configured as UL resources, and may perform an SBFD operation, e.g., transmit a UL signal in the configured UL resources.

When the SBFD-capable UE determines that the cell supports the SBFD, the SBFD-capable UE may notify the BS that the UE attempting to connect thereto is the SBFD-capable UE by transmitting, to the BS, capability information including at least one of information about whether the UE supports the SBFD, whether the UE supports full-duplex communication or half-duplex communication, or the number of transmit or receive antennas that it has (or supports). When support for half-duplex communication is a mandatory implementation for the SBFD-capable UE, whether the UE supports the half-duplex communication may not be included in the capability information. The SBFD-capable UE may report the capability information to the BS through the random access procedure, after completion of the random access procedure, or after proceeding to the RRC access mode for transmitting and receiving data to and from the cell.

The SBFD UE may support half-duplex communication for performing only UL transmission or DL reception at a time like the existing TDD UE, or support full-duplex communication for simultaneously performing both the UL transmission or the DL reception. Thus, the SBFD UE may report to the BS whether it supports the half-duplex communication or the full-duplex communication via capability report, and after the report, the BS may configure the SBFD-capable UE with whether the SBFD-capable UE is to transmit and receive signals to the BS by using the half-duplex communication or the full-duplex communication. In case that the SBFD-capable UE reports its capability for the half-duplex communication to the base station, because there is no duplexer in general, a switching gap may be required to change RFs between transmission and reception when operating in FDD or TDD.

In general, the UE may establish a radio link with the network through a random access procedure based on system information and synchronization with the network obtained in a cell search procedure for a cell. Random access may be performed using a contention-based method or a contention-free method. The contention-based random access method may be used when the UE performs cell selection and reselection in an initial access process for a cell, e.g., when the UE moves from an RRC_IDLE state to an RRC_CONNECTED state. The contention-free random access may be used to reestablish UL synchronization in the case of DL data arrival, handover, or location measurement.

In the disclosure, a method for PDSCH frequency resource allocation and mapping in an SBFD system is described. In an embodiment, a method of scheduling a PDSCH without considering a UL subband of an SBFD system may be included. In an embodiment, a method of scheduling a PDSCH by considering a fractional RBG may be included.

<VRB allocation and VRB-to-PRB mapping without considering UL subband>

In an embodiment of the disclosure, the UE may determine a starting VRB index of VRBs scheduled for a PDSCH and the number of consecutive VRBs via Type-1 frequency domain resource assignment (FDRA) transmitted from the BS. The UE may determine PRBs corresponding to the scheduled VRBs through VRB-to-PRB mapping. The UE may receive a PDSCH in the determined PRBs. In case that some of the determined PRBs are included in a UL subband, the UE may receive the PDSCH, assuming that the PDSCH is not transmitted in the some PRBs. In other words, although the PRBs are scheduled via the Type-1 FDRA, the PDSCH may be received only in the remaining PRBs excluding the PRBs overlapping with the UL subband.

It is noted that the overlap of the UL subband and the PRBs may be determined using at least one of the following methods.

In a first method, when at least one of REs of PRBs of scheduled symbols overlaps with at least one of REs allocated to the UL subband, the PRBs may be determined to be overlapping. Here, the scheduled symbols may be indicated by time domain resource assignment (or TDRA) within a DCI format that schedules the PDSCH.

In a second method, when at least one of REs of PRBs of DMRS scheduled symbols overlaps with at least one of the REs allocated to the UL subband, the PRBs may be determined to be overlapping. Here, the DMRS scheduled symbols refer to symbols in which a DMRS is transmitted among the scheduled symbols for the PDSCH indicated by the time domain resource assignment (TDRA) within the DCI format that schedules the PDSCH.

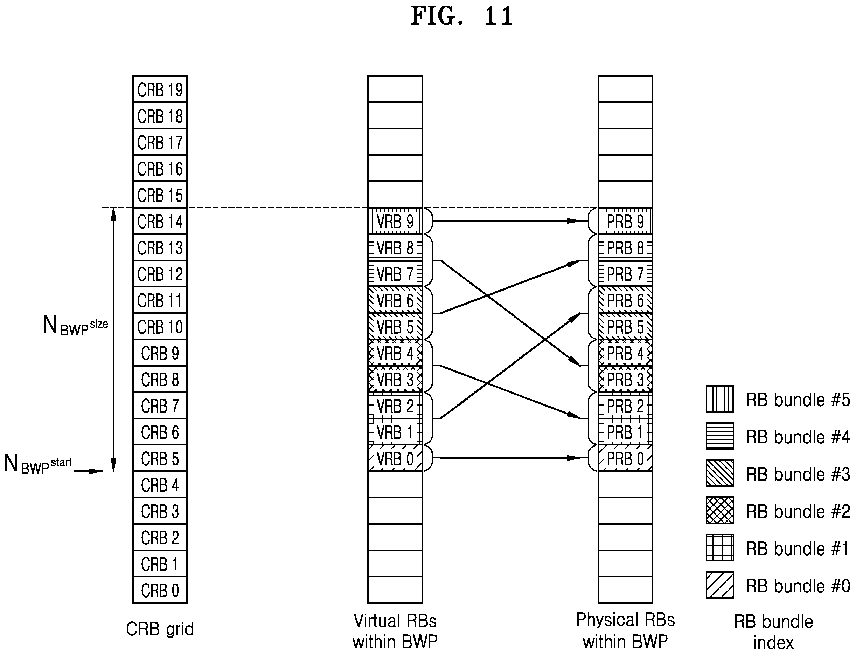

For example, referring to FIG. 11, it is assumed that a DL BWP configured for the UE includes 10 RBs. The RBs may be indexed with VRB indices and PRB indices, respectively. That is, a lowest VRB along the frequency axis in the DL BWP may be indexed as VRB 0, and a lowest PRB along the frequency axis may be indexed as PRB 0. Subsequent RBs may be indexed in an increasing order of frequency. In this case, a PRB allocated to the UL subband may be assumed to be PRB 4.

Referring to FIG. 11, the UE may create bundles by respectively bundling VRBs and PRBs in the DL BWP. A bundle created by bundling VRBs may be referred to as a VRB bundle, and a bundle created by bundling PRBs may be referred to as a PRB bundle. The length of a bundle (a bundle size) may be configured via a higher layer signal. The bundle size may be a value of either 2 or 4. In FIG. 10, 10 VRBs and 10 PRBs may be bundled into 6 bundles each. VRB bundle #0 includes {VRB 0}, VRB bundle #1 includes {VRB 1 and VRB 2}, VRB bundle #2 includes {VRB 3 and VRB 4}, VRB bundle #3 includes {VRB 5 and VRB 6}, VRB bundle #4 includes {VRB 7 and VRB 8}, and VRB bundle #5 includes {VRB 9}. PRB bundle #0 includes {PRB 0}, PRB bundle #1 includes {PRB 1 and PRB 2}, PRB bundle #2 includes {PRB 3 and PRB 4}, PRB bundle #3 includes {PRB 5 and PRB 6}, PRB bundle #4 includes {PRB 7 and PRB 8}, and PRB bundle #5 includes {PRB 9}. According to the VRB-to-PRB mapping expression, the bundles may be mapped as follows.

VRB bundle 0 -> PRB bundle 0
VRB bundle 1 -> PRB bundle 3
VRB bundle 2 -> PRB bundle 1
VRB bundle 3 -> PRB bundle 4
VRB bundle 4 -> PRB bundle 2
VRB bundle 5 -> PRB bundle 5

For example, when the VRB 4, VRB 5, VRB 6, VRB 7, and VRB 8 are scheduled via the Type-1 FDRA received by the UE, the UE may determine that the PRB 2, PRB 7, PRB 8, PRB 3, and PRB 4 are scheduled according to the VRB-to-PRB mapping expression. In addition, the UE may assume that the PDSCH cannot be transmitted in the PRB 4, which overlaps with the UL subband among the PRBs, and receive the PDSCH only in the PRB 2, PRB 7, PRB 8, and PRB 3.

It is noted that the 5 VRBs are scheduled for the UE, but when calculating the length of a transport block (TB), the UE may use 4 PRBs that are actually used for reception. That is, the determined length of the TB may be proportional to the number of PRBs that are actually used for reception.

< VRB-to-PRB Mapping Considering Fractional RBG>

In an embodiment of the disclosure, a VRBs are scheduled for the UE via the Type-1 FDRA. For example, it is assumed that the DL BWP includes 273 VRBs. In this case, 16 bits are required for Type-1 FDRA. (The number of bits is obtained as ceil(log2(N*(N+1)/2), where N is the number of VRBs included in the DL BWP.). It is assumed that the UE is configured with a UL subband. Assuming that the UL subband includes 100 RBs, the number of PRBs actually scheduled may be 173 (=273-100). For Type-1 FDRA indication considering only the schedulable PRBs, the number of required bits is 14. Therefore, 2 unnecessary bits may be included. The disclosure discloses a method by which the BS schedules only PRBs that are available for scheduling by taking into account the UL subband.

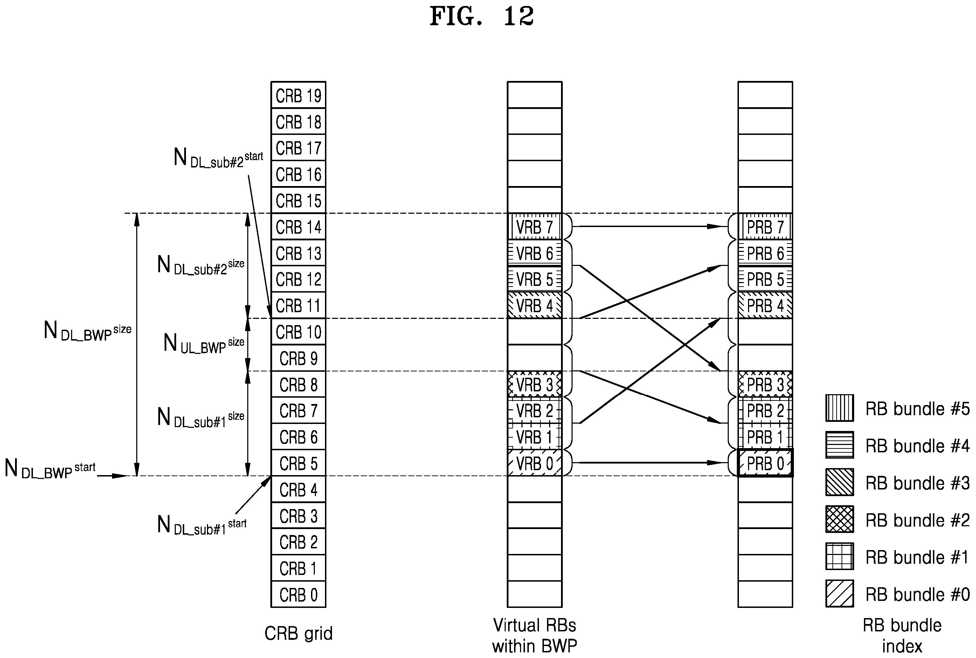

The UE may index a VRB and a PRB by taking into account the UL subband. Referring to FIG. 12, it is assumed that a DL BWP configured for the UE includes 10 RBs. A VRB index and a PRB index may be assigned by taking into account the UL subband. That is, a lowest VRB along the frequency axis in the DL BWP may be indexed as VRB 0, and a lowest PRB along the frequency axis may be indexed as PRB 0. Subsequent RBs may be indexed in an increasing order of frequency. Here, VRBs and PRBs that overlap with the UL subband may be excluded from indexing. Therefore, even though the DL BWP includes 10 RBs, VRB indices and PRB indices are each numbered from 0 to 7.

Referring to FIG. 12, the UE may create bundles by respectively bundling the VRBs and PRBs. Specifically, a method of creating a bundle is as follows. It is assumed that L is a bundling size.

- The UE may determine the number of DL subbands according to a UL subband configuration. The DL subband consists of consecutive RBs as the remaining RBs excluding those in the UL subband in the DL BWP. In case that the UL subband is located at the lowest numbered RB or the highest numbered RB of the DL BWP, the UE has one DL subband within the DL BWP. However, in case that the UL subband is located in an intermediate frequency region of the DL BWP, the UE has a first DL subband below the UL subband and a second DL subband above the UL subband in the frequency region within the DL BWP.

- It is assumed that there is 1 DL subband. It is also assumed that a starting RB index of the DL subband is $N_{DLsub}^{start}$, and the number of RBs included in the DL subband is $N_{DLsub}^{size}$. Here, the RB index is a common RB (CRB) index. In this case, the number of bundles is obtained as $N_{bundle} = \lceil (N_{DLsub}^{size} + (N_{DLsub}^{start} \bmod L))/L \rceil$, bundle 0 includes $L - (N_{DLsub}^{start} \bmod L)$ RBs, and bundle $N_{bundle}$ - 1 includes $(N_{DLsub}^{start} + N_{DLsub}^{size}) \bmod L$ RBs if $(N_{DLsub}^{start} + N_{DLsub}^{size}) \bmod L > 0$, and includes L RBs otherwise. The remaining bundles (bundles other than bundle 0 and bundle $N_{bundle}$ - 1 ) each include L RBs.

- It is assumed that there are 2 DL subbands. It is assumed that a starting RB index of the first DL subband is $N_{DLsub\#1}^{start}$, and the number of RBs included in the first DL subband is $N_{DLsub\#1}^{size}$. It is also assumed that a starting RB index of the second DL subband is $N_{DLsub\#2}^{start}$, and the number of RBs included in the second DL subband is $N_{DLsub\#2}^{size}$. Here, the RB index is a CRB index. In this case, the number of bundles is obtained as $N_{bundle} = N_{bundle\#1} + N_{bundle\#2}$. Here, $N_{bundle\#1}$ is a bundle of RBs included in the first DL subband, and $N_{bundle\#2}$ is a bundle of RBs included in the second DL subband. It is noted that the RBs included in the first DL subband and the RBs included in the second DL subband cannot be bundled into one bundle. $N_{bundle\#1} = \lceil (N^{size}_{DLsub\#1} + (N^{start}_{DLsub\#1} \bmod L))/L \rceil$ , and $N_{bundle\#2} = \lceil (N^{size}_{DLsub\#2} + (N^{start}_{DLsub\#2} \bmod L))/L \rceil$ . Bundle 0 includes $L - (N^{start}_{DLsub\#1} \bmod L)$ RBs, and bundle $N_{bundle\#1} - 1$ includes $(N^{start}_{DLsub\#1} + N^{size}_{DLsub\#1}) \bmod L$ RBs if $(N^{start}_{DLsub\#1} + N^{size}_{DLsub\#1}) \bmod L > 0$ , and includes L RBs otherwise. Bundle $N_{bundle\#1}$ includes $L - (N^{start}_{DLsub\#2} \bmod L)$ RBs, and bundle $N_{bundle\#1} + N_{bundle\#2} - 1$ includes $(N^{start}_{DLsub\#2} + N^{size}_{DLsub\#2}) \bmod L$ RBs if $(N^{start}_{DLsub\#2} + N^{size}_{DLsub\#2}) \bmod L > 0$ , and includes L RBs otherwise. The remaining bundles (bundles other than bundle 0, bundle #$N_{bundle\#1} - 1$, bundle #$N_{bundle\#1}$ , and bundle #$N_{bundle\#1} + N_{bundle\#2} - 1$ ) each include L RBs.

Referring to FIG. 12, the UE may determine that two DL subbands exist, wherein the starting RB index of the first DL subband is $N^{start}_{DLsub\#1} = 5$ , and the number of RBs included in the first DL subband is $N^{size}_{DLsub\#1} = 4$ . The starting RB index of the second DL subband is $N^{start}_{DLsub\#2} = 11$ , and the number of RBs included in the second DL subband is $N^{size}_{DLsub\#2} = 4$ .

VRBs and PRBs may be bundled into six bundles each. VRB bundle #0 includes {VRB 0}, VRB bundle #1 includes {VRB 1 and VRB 2}, VRB bundle #2 includes {VRB 3}, VRB bundle #3 includes {VRB 4}, VRB bundle #4 includes {VRB 5 and VRB 6}, and VRB bundle #5 includes {VRB 7}. PRB bundle #0 includes {PRB 0}, PRB bundle #1 includes {PRB 1 and PRB 2}, PRB bundle #2 includes {PRB 3}, PRB bundle #3 includes {PRB 4}, PRB bundle #4 includes {PRB 5 and PRB 6}, and PRB bundle #5 includes {PRB 7}.

According to the VRB-to-PRB mapping expression, the UE may perform mapping as follows.

VRB bundle #0 -> PRB bundle #0
VRB bundle #1 -> PRB bundle #3
VRB bundle #2 -> PRB bundle #1
VRB bundle #3 -> PRB bundle #4
VRB bundle #4 -> PRB bundle #2
VRB bundle #5 -> PRB bundle #5

**However,** in this case, the UE may perform mapping between a VRB bundle and a PRB bundle containing different numbers of RBs. For example, VRB bundle #1 includes two VRBs {VRB 1 and VRB 2}, while the corresponding PRB bundle #3 includes one PRB {PRB 4}. For example, VRB bundle#2 includes one VRB {VRB 3}, while the corresponding PRB bundle#1 includes two PRBs {PRB 1 and PRB 2}. This may cause the following problem.

When VRB 1 is scheduled for a first UE and VRB 2 is scheduled for a second UE, the two UEs receive a PDSCH in the same PRB (PRB4). As a result, the RBs were different RBs in the VRB domain, but may be the same RB in the PRB domain. Therefore, such collisions need to be avoided.

The disclosure provides a VRB-to-PRB mapping method to address this problem.

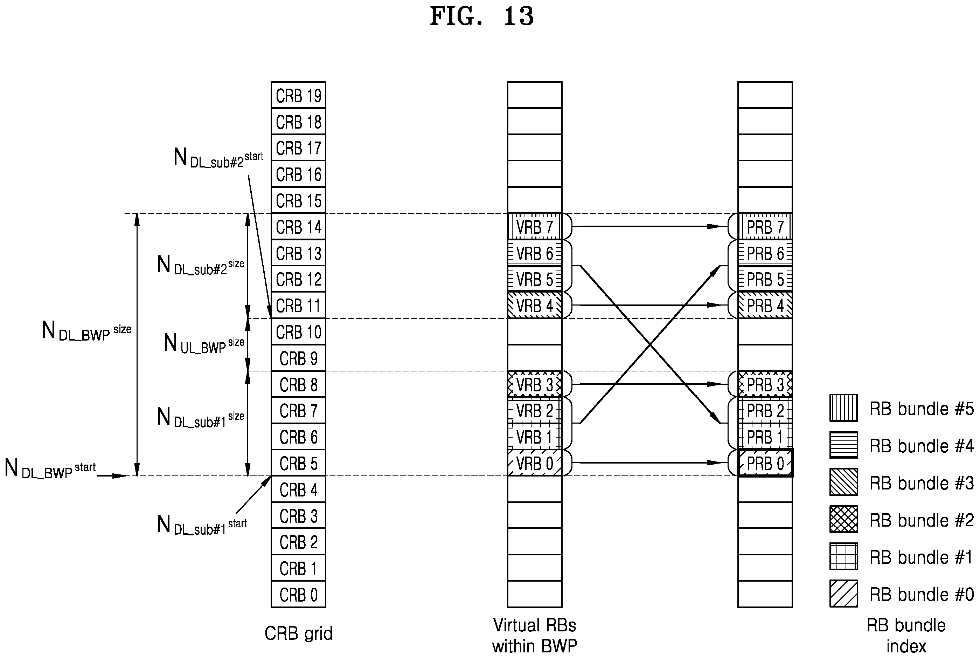

In a first method, the UE maps a VRB bundle #$N_{bundle\#1}$ -1 to a PRB bundle #$N_{bundle\#1} - 1$, and maps a VRB bundle #$N_{bundle\#1}$ to a PRB bundle #$N_{bundle\#1}$ . (It is noted that a VRB bundle #$N_{bundle\#1} + N_{bundle\#2} - 1$ is mapped to a PRB bundle #$N_{bundle\#1} + N_{bundle\#2} - 1$) The mapping of the remaining VRB bundles and PRB bundles is determined according to an interleaving function. For this purpose, VRB bundles may be reindexed. It is assumed that a new index is called an interleaving index of a VRB bundle. The interleaving index of the VRB bundle may be obtained by indexing the remaining VRB bundles excluding the VRB bundle #$N_{bundle\#1} - 1$ and the VRB bundle #$N_{bundle\#1}$ in increasing order of frequency from 0. PRB bundles may be reindexed. It is assumed that a new index is called an interleaving index of a PRB bundle. The interleaving index of the PRB bundle may be obtained by indexing the remaining PRB bundles excluding the PRB bundle #$N_{bundle\#1} - 1$ and the PRB bundle #$N_{bundle\#1}$ in increasing order of frequency from 0. For example, referring to FIG. 13, an interleaving index of VRB bundle #0 may be numbered as 0, an interleaving index of VRB bundle #1 as 1, an interleaving index of VRB bundle #4 as 2, and an interleaving index of VRB bundle #5 as 3. An interleaving index of PRB bundle #0 may be numbered as 0, an interleaving index of PRB bundle #1 as 1, an interleaving index of PRB bundle #4 as 2, and an interleaving index of PRB bundle #5 as 3. The UE may perform interleaving based on the interleaving indices.

That is, an interleaving index $j = 0, 1, \ldots, N'_{bundle} - 2$ of a VRB bundle may be mapped to an interleaving index f(j) of the VRB bundle. Here,

$$N'_{bundle} =$$

is the number of bundles used for interleaving, and $N'_{bundle} = N_{bundle} - 2$. The interleaving function f(j) may be obtained as follows.

$$f(j) = r*C+c;$$

$$j = c*R+r;$$

$$r = 0,1,\ldots,R-1;$$

$$c = 0,1,\ldots,C-1;$$

$$R = 2;$$

$$C = floor(N'_{bundle}/R)$$

According to the above function, the following mapping may be obtained.

VRB bundle #0 -> PRB bundle #0
VRB bundle #1 -> PRB bundle #4
VRB bundle #2 -> PRB bundle #2
VRB bundle #3 -> PRB bundle #3
VRB bundle #4 -> PRB bundle #1
VRB bundle #5 -> PRB bundle #5

In a second method, the UE maps the VRB bundle #$N_{bundle\#1}$ -1 to the PRB bundle #$N_{bundle\#1}$ - 1 when the VRB bundle #$N_{bundle\#1}$ - 1 does not include L VRBs. Also, the UE maps the VRB bundle #$N_{bundle\#1}$ to the PRB bundle #$N_{bundle\#1}$ when the VRB bundle #$N_{bundle\#1}$ does not include L VRBs. That is, the UE maps a VRB bundle with a size smaller than a configured bundle size to a PRB bundle with the same index as the VRB bundle, thereby keeping the number of RBs included in each of the mapped VRB bundle and PRB bundle the same. The mapping between the remaining VRB bundles and the remaining PRB bundles is determined according to the interleaving function. Subsequently, the interleaving method is performed in the same manner except for $N'_{bundle}$. $N'_{bundle}$ is the number of bundles used for interleaving, and $N'_{bundle} = N_{bundle}$ if both the VRB bundle #$N_{bundle\#1}$ - 1 and the VRB bundle #$N_{bundle\#1}$ include L VRBs, $N'_{bundle} = N_{bundle} - 1$ if one of the VRB bundle #$N_{bundle\#1}$ - 1 and the VRB bundle #$N_{bundle\#1}$ includes L VRBs and the other does not include L VRBs, and $N'_{bundle} = N_{bundle} - 2$ if neither the VRB bundle #$N_{bundle\#1}$ - 1 nor the VRB bundle #$N_{bundle\#1}$ includes L VRBs.

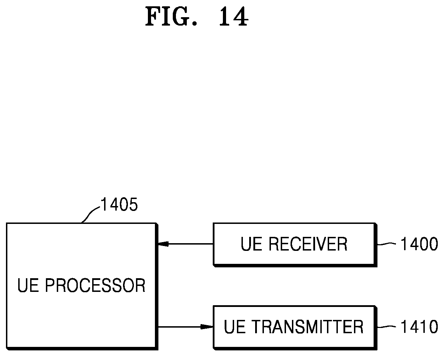

FIG. 14 illustrates a structure of a UE in a wireless communication system, according to an embodiment of the disclosure.

Referring to FIG. 14, the UE may include a transceiver that refers to a UE receiver 1400 and a UE transmitter 1410, a memory (not shown), and a UE processor 1405 (or a UE controller or a processor). The transceiver (1400 and 1410), the memory, and the UE processor 1405 of the UE may operate according to the above-described communication method of the UE. However, the components of the UE are not limited to the above-described example. For example, the UE may include more or fewer components than those described above. In addition, the transceiver, the memory, and the processor may be implemented in the form of a single chip.

The transceiver may transmit and receive signals to and from a BS. Here, the signals may include control information and data. For this purpose, the transceiver may include an RF transmitter for up-converting and amplifying a frequency of a signal to be transmitted and an RF receiver for low-noise amplifying a received signal and downconverting the frequency of the received signal. However, this is merely an embodiment of the transceiver, and the components of the transceiver are not limited to the RF transmitter and the RF receiver.

In addition, the transceiver may receive a signal via a wireless channel and output the signal to the processor, and transmit a signal output from the processor via a wireless channel.

The memory may store programs and data necessary for operation of the UE. Furthermore, the memory may store control information or data included in signals transmitted and received by the UE. The memory may be composed of storage media, such as read-only memory (ROM), random access memory (RAM), hard discs, compact disc (CD)-ROM, and digital versatile discs (DVDs), or a combination of storage media. In addition, the memory may be a plurality of memories.

The processor may also control a series of processes for the UE to operate according to the above-described embodiments. For example, the processor may control the components of the UE to receive DCI composed of two layers and simultaneously receive multiple PDSCHs. The processor may be configured as a plurality of processors, and may perform operations for controlling the components of the UE by executing a program stored in the memory.

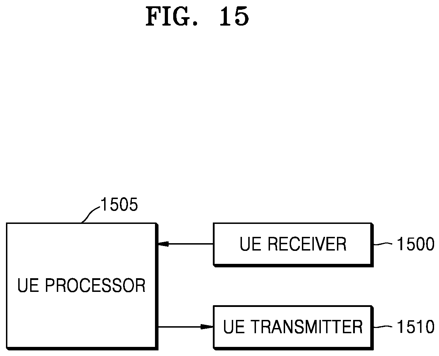

FIG. 15 illustrates a structure of a BS in a wireless communication system, according to an embodiment of the disclosure.

Referring to FIG. 15, the BS may include a transceiver that refers to a BS receiver 1510 and a BS transmitter 1510, a memory (not shown), and a BS processor 2105 (or a BS controller or a processor). The transceiver (1500 and 1510), the memory, and the BS processor 1505 of the BS may operate according to the above-described communication method of the BS. However, the components of the BS are not limited to the above-described example. For example, the BS may include more or fewer components than those described above. In addition, the transceiver, the memory, and the processor may be implemented in the form of a single chip.

The transceiver may transmit and receive signals to and from a UE. Here, the signals may include control information and data. For this purpose, the transceiver may include an RF transmitter for up-converting and amplifying a frequency of a signal to be transmitted and an RF receiver for low-noise amplifying a received signal and downconverting the frequency of the received signal. However, this is merely an embodiment of the transceiver, and the components of the transceiver are not limited to the RF transmitter and the RF receiver.

In addition, the transceiver may receive a signal via a wireless channel and output the signal to the processor, and transmit a signal output from the processor via a wireless channel.

The memory may store programs and data necessary for operation of the BS. Furthermore, the memory may store control information or data included in signals transmitted and received by the BS. The memory may be composed of storage media, such as ROM, RAM, hard discs, CD-ROM, and DVDs, or a combination of storage media. In addition, the memory may be a plurality of memories.

The processor may also control a series of processes for the BS to operate according to the above-described embodiments of the disclosure. For example, the processor may control the components of the BS to configure and transmit DCIs of two layers, which include allocation information for multiple PDSCHs. The processor may be configured as a plurality of processors, and may perform operations for controlling the components of the BS by executing a program stored in the memory.

Methods according to the embodiments described in the claims of the disclosure or the specification thereof may be implemented in hardware, software, or a combination of hardware and software.

When the methods are implemented in software, a computer-readable storage medium having one or more programs (software modules) stored thereon may be provided. The one or more programs stored in the computer-readable storage medium is configured for execution by one or more processors within an electronic device. The one or more programs include instructions that cause the electronic device to execute the methods according to the embodiments described in the claims of the disclosure or the specification thereof.

The programs (software modules or software) may be stored in RAM, non-volatile memory including a flash memory, ROM, electrically erasable programmable ROM (EEPROM), magnetic disc storage devices, CD-ROM, DVDs or other types of optical storage devices, and magnetic cassettes. Alternatively, the programs may be stored in a memory including a combination of some or all of the stated devices. A plurality of such devices may be included in the memory.

Furthermore, the programs may be stored in an attachable storage device accessible through a communication network, such as the Internet, Intranet, a local area network (LAN), a wide LAN (WLAN), or a storage area network (SAN), or a communication network configured in a combination thereof. The storage device may connect to a device for performing the embodiments of the disclosure via an external port. Furthermore, a separate storage device on a communication network may also connect to a device for performing the embodiments of the disclosure.

In the specific embodiments of the disclosure, a component included in the disclosure is expressed in a singular or plural form depending on the presented specific embodiments. However, singular or plural expressions are selected to be suitable for situations presented for convenience of description, and the disclosure is not limited to elements in a singular or plural form, i.e., an element expressed in a plural form may be configured as a single element, or an element expressed in a singular form may be configured as a plurality of elements.

Moreover, the embodiments of the disclosure disclosed in the specification and the accompanying drawings are provided only as specific examples in order to easily describe the technical idea of the disclosure and assist in understanding the disclosure and are not intended to limit the scope of the disclosure. In other words, it is obvious to those of ordinary skill in the art that other modifications may be made based on the technical spirit of the disclosure. Furthermore, the embodiments may be combined with each other for operation when necessary. For example, parts of an embodiment of the disclosure and another embodiment thereof may be combined with each other to operate the BS and the UE. For example, parts of a first embodiment of the disclosure and a second embodiment thereof may be combined with each other to operate the BS and the UE. Furthermore, while the embodiments are provided with respect to an FDD LTE system, other modifications based on the technical idea of the embodiments may be implemented in other systems such as a TDD LTE system, a 5G or NR system, etc.

Moreover, in the drawings illustrating the methods of the disclosure, the order of description does not necessarily correspond to the order of execution, and the methods may be performed in a reverse order or executed in parallel.

Alternatively, the drawings illustrating the methods of the disclosure may not include some elements and may include only some elements without impairing the essence of the disclosure.

Furthermore, the methods of the disclosure may be carried out in combination of some or all of the contents included in each embodiment within the scope not departing from the essence of the disclosure.

Various embodiments of the disclosure have been described. The above description of the disclosure is provided for illustration, and embodiments of the disclosure are not limited to the disclosed embodiments. It will be understood by one of ordinary skill in the art that changes in form and details may be readily made therein without departing from technical idea or essential features of the disclosure. The scope of the disclosure is defined not by the detailed description thereof but by the following claims, and all the changes or modifications within the meaning and scope of the appended claims and their equivalents should be construed as being included in the scope of the disclosure.

A method performed by a UE, according to an embodiment of the disclosure, may include receiving frequency domain resource assignment information from a BS.

According to an embodiment of the disclosure, the method performed by the UE may include identifying, based on the frequency domain resource assignment information, at least one VRB associated with reception of a PDSCH.

According to an embodiment of the disclosure, the method performed by the UE may include mapping the identified at least one VRB to at least one PRB.

According to an embodiment of the disclosure, the method performed by the UE may include identifying whether the mapped at least one PRB overlaps with a UL subband.

According to an embodiment of the disclosure, the method performed by the UE may include, when the mapped at least one PRB is identified as overlapping with the UL subband, receiving the PDSCH in at least one PRB excluding at least one PRB that overlaps with the UL subband from the mapped at least one PRB.

According to an embodiment of the disclosure, the method performed by the UE may include, when the mapped at least one PRB is identified as not overlapping with the UL subband, receiving the PDSCH in the mapped at least one PRB.

According to an embodiment of the disclosure, the method performed by the UE may include, when at least one RE included in the UL subband overlaps with at least one RE associated with the reception of the PDSCH, identifying the mapped at least one PRB as overlapping with the UL subband.

According to an embodiment of the disclosure, the at least one RE associated with the reception of the PDSCH may include at least one RE included in at least one PRB of at least one symbol indicated based on time domain resource assignment information in a DCI format that schedules the PDSCH.

According to an embodiment of the disclosure, the at least one symbol may include at least one symbol in which a DMRS is transmitted.

According to an embodiment of the disclosure, the method performed by the UE may include bundling the at least one VRB and the at least one PRB based on a higher layer signal.

According to an embodiment of the disclosure, the method performed by the UE may include mapping the bundled at least one VRB to the bundled at least one PRB.

A UE according to an embodiment of the disclosure may include a transceiver and at least one processor connected to the transceiver.

The at least one processor may be configured to receive frequency domain resource assignment information from a BS.

The at least one processor may be configured to identify, based on the frequency domain resource assignment information, at least one VRB associated with reception of a PDSCH.

The at least one processor may be configured to map the identified at least one VRB to at least one PRB.

The at least one processor may be configured to identify whether the mapped at least one PRB overlaps with a UL subband.

The at least one processor may be configured to, when the mapped at least one PRB is identified as overlapping with the UL subband, receive the PDSCH in at least one PRB excluding at least one PRB that overlaps with the UL subband from the mapped at least one PRB.

The at least one processor may be configured to, when the mapped at least one PRB is identified as not overlapping with the UL subband, receive the PDSCH in the mapped at least one PRB.

The at least one processor may be configured to, when at least one RE included in the UL subband overlaps with at least one RE associated with the reception of the PDSCH, identify the mapped at least one PRB as overlapping with the UL subband.

The at least one processor may be configured to bundling the at least one VRB and the at least one PRB based on a higher layer signal.

The at least one processor may be configured to map the bundled at least one VRB to the bundled at least one PRB.

A method performed by a BS, according to an embodiment of the disclosure, may include mapping at least one VRB associated with transmission of a PDSCH to at least one PRB.

According to an embodiment of the disclosure, the method performed by the BS may include identifying whether the at least one VRB overlaps with a UL subband.

According to an embodiment of the disclosure, the method performed by the BS may include, when the at least one VRB is identified as overlapping with the UL subband, transmitting the PDSCH in at least one PRB excluding, from the mapped at least one PRB, at least one PRB corresponding to the at least one VRB that overlaps with the UL subband.

According to an embodiment of the disclosure, the method performed by the BS may include, when the at least one VRB is identified as not overlapping with the UL subband, transmitting the PDSCH in the mapped at least one PRB.

A BS according to an embodiment of the disclosure may include a transceiver and at least one processor connected to the transceiver.

The at least one processor may be configured to map at least one VRB associated with transmission of a PDSCH to at least one PRB.

The at least one processor may be configured to identify whether the at least one VRB overlaps with a UL subband.

The at least one processor may be configured to, when the at least one VRB is identified as overlapping with the UL subband, transmit the PDSCH in at least one PRB excluding, from the mapped at least one PRB, at least one PRB corresponding to the at least one VRB that overlaps with the UL subband.

The at least one processor may be configured to, when the at least one VRB is identified as not overlapping with the UL subband, transmit the PDSCH in the mapped at least one PRB.

The at least one processor may be configured to transmit, to a UE, frequency domain resource assignment information for the at least one VRB associated with the transmission of the PDSCH.

**Claims**

1. A method performed by a user equipment (UE) in a wireless communication system, the method comprising:

   receiving frequency domain resource assignment information from a base station;
   identifying, based on the frequency domain resource assignment information, at least one virtual resource block (VRB) associated with reception of a physical downlink shared channel (PDSCH);
   mapping the identified at least one VRB to at least one physical resource block (PRB);
   identifying whether the mapped at least one PRB overlaps with an uplink subband; and
   when the mapped at least one PRB is identified as overlapping with the uplink subband, receiving the PDSCH in at least one PRB excluding at least one PRB that overlaps with the uplink subband from the mapped at least one PRB.

2. The method of claim 1, further comprising, when the mapped at least one PRB is identified as not overlapping with the uplink subband, receiving the PDSCH in the mapped at least one PRB.

3. The method of claim 1, wherein the identifying of whether the mapped at least one PRB overlaps with the uplink subband comprises, when at least one resource element (RE) included in the uplink subband overlaps with at least one RE associated with the reception of the PDSCH, identifying the mapped at least one PRB as overlapping with the uplink subband.

4. The method of claim 3, wherein the at least one RE associated with the reception of the PDSCH comprises at least one RE included in at least one PRB of at least one symbol indicated based on time domain resource assignment information in a downlink control information (DCI) format that schedules the PDSCH.

5. The method of claim 3, wherein the at least one symbol comprises at least one symbol in which a demodulation reference signal (DMRS) is transmitted.

6. The method of claim 1, wherein the mapping of the identified at least one VRB to the at least one PRB comprises:

bundling the at least one VRB and the at least one PRB based on a higher layer signal; and
mapping the bundled at least one VRB to the bundled at least one PRB.

7. A user equipment (UE) in a wireless communication system, the UE comprising:

a transceiver; and
at least one processor connected to the transceiver,
wherein the at least one processor is configured to
receive frequency domain resource assignment information from a base station,
identify, based on the frequency domain resource assignment information, at least one virtual resource block (VRB) associated with reception of a physical downlink shared channel (PDSCH),
map the identified at least one VRB to at least one physical resource block (PRB),
identify whether the mapped at least one PRB overlaps with an uplink subband, and
when the mapped at least one PRB is identified as overlapping with the uplink subband, receive the PDSCH in at least one PRB excluding at least one PRB that overlaps with the uplink subband from the mapped at least one PRB.

8. The UE of claim 7, wherein the at least one processor is further configured to, when the mapped at least one PRB is identified as not overlapping with the uplink subband, receive the PDSCH in the mapped at least one PRB.

9. The UE of claim 7, wherein the at least one processor is further configured to, when at least one resource element (RE) included in the uplink subband overlaps with at least one RE associated with the reception of the PDSCH, identify the mapped at least one PRB as overlapping with the uplink subband.

10. The UE of claim 9, wherein the at least one RE associated with the reception of the PDSCH comprises at least one RE included in at least one PRB of at least one symbol indicated based on time domain resource assignment information in a downlink control information (DCI) format that schedules the PDSCH.

11. The UE of claim 9, wherein the at least one symbol comprises at least one symbol in which a demodulation reference signal (DMRS) is transmitted.

12. The UE of claim 7, wherein the at least one processor is further configured to

bundle the at least one VRB and the at least one PRB based on a higher layer signal, and
map the bundled at least one VRB to the bundled at least one PRB.

13. A method performed by a base station in a wireless communication system, the method comprising:

mapping at least one virtual resource block (VRB) associated with transmission of a physical downlink shared channel (PDSCH) to at least one physical resource block (PRB);
identifying whether the at least one VRB overlaps with an uplink subband; and
when the at least one VRB is identified as overlapping with the uplink subband, transmitting the PDSCH in at least one PRB excluding, from the mapped at least one PRB, at least one PRB corresponding to the at least one VRB that overlaps with the uplink subband.

14. A base station in a wireless communication system, the base station comprising:

a transceiver; and
at least one processor connected to the transceiver,
wherein the at least one processor is configured to
map at least one virtual resource block (VRB) associated with transmission of a physical downlink shared channel (PDSCH) to at least one physical resource block (PRB),

identify whether the at least one VRB overlaps with an uplink subband, and

when the at least one VRB is identified as overlapping with the uplink subband, transmit the PDSCH in at least one PRB excluding, from the mapped at least one PRB, at least one PRB corresponding to the at least one VRB that overlaps with the uplink subband.

15. The base station of claim 14, wherein the at least one processor is further configured to, transmit, to a user equipment (UE), frequency domain resource assignment information for the at least one VRB associated with the transmission of the PDSCH.

## FIG. 1

One subframe — 110

$N_{symb}^{subframe,\mu}$ OFDM symbols

1 OFDM symbols — 102

$k = N_{RB,x}^{max,\mu} N_{sc}^{RB} - 1$

1 subcarrier / 103

104 / Resource block $N_{sc}^{RB}$ subcarriers

$N_{RB}^{\mu} N_{sc}^{RB}$ subcarriers

101 / Resource element (k, $l$)

k = 0

Frequency

$\tilde{l} = 0$

$\tilde{l} = 14 \cdot 2^{\mu} - 1$

Time

# FIG. 2

# FIG. 3

301
BWP#1

302
BWP#2

Frequency

UE bandwidth

300

**FIG. 4**

Frequency ↑ → Time

404 ⁓ Duration

403 Frequency resources

410 UE bandwidth part

420 ⁓ Slot

Control resource#1 ⁓ 401

Control resource#2 ⁓ 402

EP 4 604 648 A1

# FIG. 5

# FIG. 6

605
Periodicity

Rate matching
resource
602

604
Frequency–
domain
Allocation

Time–domain
Allocation

603

PDSCH
601

Frequency

Time

slot≠0          slot≠1          slot≠2

# FIG. 7

7-00  RA type 0 | 7-15 Bitmap

7-05  RA type 1 | 7-20 Starting VRB | 7-25 Length

7-10  Both RA TYPE 0 & 1 | 7-30 1 bit for RA type indication | 7-35 Max{payload for RA type 0, payload for RA type 1}

# FIG. 8

S
(8-00)

8-05

L

| 0 | 1 | 2 | 3 | 4 | 5 | 6 | 7 | 8 | 9 | 10 | 11 | 12 | 13 |

OFDM symbol

$$\text{Slot}\left[n \cdot \frac{2^{\mu_{PDSCH}}}{2^{\mu_{PDCCH}}}\right] + K_0$$

8-10

EP 4 604 648 A1

# FIG. 9

9-00 {

$\mu_{PDCCH} = 1$ | PDCCH |

Slot n    Slot n + 1    . . .    t

PDSCH    t

$\mu_{PDSCH} = 1$

. . .

Slot n + $K_0$

9-05 {

$\mu_{PDCCH} = 1$ | PDCCH |

Slot n    Slot n + 1    . . .    t

PDSCH    t

$\mu_{PDSCH} = 2$

$\text{Slot} \left\lfloor n \cdot \frac{2^{\mu_{PDSCH}}}{2^{\mu_{PDCCH}}} \right\rfloor$    . . .    $\text{Slot} \left\lfloor n \cdot \frac{2^{\mu_{PDSCH}}}{2^{\mu_{PDCCH}}} \right\rfloor + K_0$

# FIG. 10

(a) TDD only configuration

(b) SBFD configuration 1

(c) SBFD configuration 2

(d) SBFD configuration 3

EP 4 604 648 A1

# FIG. 11

| CRB grid | Virtual RBs within BWP | Physical RBs within BWP | RB bundle index |

$N_{BWP}^{size}$

$N_{BWP}^{start}$

RB bundle #5
RB bundle #4
RB bundle #3
RB bundle #2
RB bundle #1
RB bundle #0

EP 4 604 648 A1

# FIG. 12

CRB grid

Virtual RBs within BWP

RB bundle index

CRB 19
CRB 18
CRB 17
CRB 16
CRB 15
CRB 14
CRB 13
CRB 12
CRB 11
CRB 10
CRB 9
CRB 8
CRB 7
CRB 6
CRB 5
CRB 4
CRB 3
CRB 2
CRB 1
CRB 0

$N_{DL\_sub\#2}^{start}$

$N_{DL\_sub\#2}^{size}$

$N_{DL\_BWP}^{size}$

$N_{UL\_BWP}^{size}$

$N_{DL\_sub\#1}^{size}$

$N_{DL\_BWP}^{start}$

$N_{DL\_sub\#1}^{start}$

VRB 7
VRB 6
VRB 5
VRB 4
VRB 3
VRB 2
VRB 1
VRB 0

PRB 7
PRB 6
PRB 5
PRB 4
PRB 3
PRB 2
PRB 1
PRB 0

RB bundle #5
RB bundle #4
RB bundle #3
RB bundle #2
RB bundle #1
RB bundle #0

EP 4 604 648 A1

# FIG. 13

$N_{DL\_sub\#2}^{start}$

$N_{DL\_sub\#2}^{size}$

$N_{DL\_BWP}^{size}$

$N_{UL\_BWP}^{size}$

$N_{DL\_sub\#1}^{size}$

$N_{DL\_BWP}^{start}$

$N_{DL\_sub\#1}^{start}$

CRB 19
CRB 18
CRB 17
CRB 16
CRB 15
CRB 14
CRB 13
CRB 12
CRB 11
CRB 10
CRB 9
CRB 8
CRB 7
CRB 6
CRB 5
CRB 4
CRB 3
CRB 2
CRB 1
CRB 0

CRB grid

VRB 7
VRB 6
VRB 5
VRB 4
VRB 3
VRB 2
VRB 1
VRB 0

Virtual RBs
within BWP

PRB 7
PRB 6
PRB 5
PRB 4
PRB 3
PRB 2
PRB 1
PRB 0

RB bundle #5
RB bundle #4
RB bundle #3
RB bundle #2
RB bundle #1
RB bundle #0

RB bundle
index

EP 4 604 648 A1

# FIG. 14

# FIG. 15

UE PROCESSOR ~1505

UE RECEIVER ~1500

UE TRANSMITTER ~1510

## INTERNATIONAL SEARCH REPORT

| International application No. |
|---|
| **PCT/KR2023/015210** |

### A. CLASSIFICATION OF SUBJECT MATTER

**H04W 72/23**(2023.01)i; **H04W 72/04**(2009.01)i; **H04W 72/12**(2009.01)i; **H04L 5/00**(2006.01)i; **H04L 5/14**(2006.01)i

According to International Patent Classification (IPC) or to both national classification and IPC

### B. FIELDS SEARCHED

Minimum documentation searched (classification system followed by classification symbols)

H04W 72/23(2023.01); H04L 1/00(2006.01); H04L 5/00(2006.01); H04L 5/14(2006.01); H04W 72/02(2009.01); H04W 72/04(2009.01); H04W 72/12(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: FDRA (frequency domain resource assignment), PDSCH, VRB (virtual resource block), PRB (physical resource block), uplink subband, mapping, overlapping

### C. DOCUMENTS CONSIDERED TO BE RELEVANT

| Category* | Citation of document, with indication, where appropriate, of the relevant passages | Relevant to claim No. |
|---|---|---|
| A | WO 2021-225656 A1 (QUALCOMM INCORPORATED) 11 November 2021 (2021-11-11)<br>See paragraphs [0064]-[0080]; and claims 1-2. | 1-15 |
| A | US 2022-0030550 A1 (VIVO MOBILE COMMUNICATION CO., LTD.) 27 January 2022 (2022-01-27)<br>See paragraph [0055]; and claims 1 and 10. | 1-15 |
| A | US 2012-0087331 A1 (SEO, Dong Youn et al.) 12 April 2012 (2012-04-12)<br>See paragraphs [0074]-[0088]; and claim 1. | 1-15 |
| A | US 2014-0016596 A1 (KIM, Hakseong et al.) 16 January 2014 (2014-01-16)<br>See paragraphs [0271]-[0282]; and claim 1. | 1-15 |
| A | US 2022-0322399 A1 (LG ELECTRONICS INC.) 06 October 2022 (2022-10-06)<br>See paragraphs [0165]-[0168]; and claim 1. | 1-15 |

☐ Further documents are listed in the continuation of Box C.   ☑ See patent family annex.

| | | | |
|---|---|---|---|
| \* | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **07 January 2024** | **08 January 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT
### Information on patent family members

| International application No. |
| --- |
| **PCT/KR2023/015210** |

| Patent document cited in search report | | | Publication date (day/month/year) | Patent family member(s) | | | Publication date (day/month/year) |
| --- | --- | --- | --- | --- | --- | --- | --- |
| WO | 2021-225656 | A1 | 11 November 2021 | CN | 115398851 | A | 25 November 2022 |
| | | | | EP | 4147402 | A1 | 15 March 2023 |
| | | | | KR | 10-2023-0004551 | A | 06 January 2023 |
| | | | | TW | 202147879 | A | 16 December 2021 |
| | | | | US | 2023-0135832 | A1 | 04 May 2023 |
| US | 2022-0030550 | A1 | 27 January 2022 | CN | 109803412 | A | 24 May 2019 |
| | | | | CN | 109803412 | B | 29 January 2021 |
| | | | | CN | 112888073 | A | 01 June 2021 |
| | | | | CN | 112888073 | B | 16 December 2022 |
| | | | | EP | 3697153 | A1 | 19 August 2020 |
| | | | | EP | 3697153 | B1 | 23 November 2022 |
| | | | | EP | 4135463 | A1 | 15 February 2023 |
| | | | | JP | 2021-501525 | A | 14 January 2021 |
| | | | | JP | 7052033 | B2 | 11 April 2022 |
| | | | | KR | 10-2020-0079548 | A | 03 July 2020 |
| | | | | KR | 10-2410379 | B1 | 16 June 2022 |
| | | | | US | 11800489 | B2 | 24 October 2023 |
| | | | | WO | 2019-095907 | A1 | 23 May 2019 |
| US | 2012-0087331 | A1 | 12 April 2012 | EP | 2439995 | A2 | 11 April 2012 |
| | | | | KR | 10-1646791 | B1 | 09 August 2016 |
| | | | | KR | 10-2010-0130154 | A | 10 December 2010 |
| | | | | US | 8693424 | B2 | 08 April 2014 |
| | | | | WO | 2010-140828 | A2 | 09 December 2010 |
| | | | | WO | 2010-140828 | A3 | 31 March 2011 |
| US | 2014-0016596 | A1 | 16 January 2014 | EP | 2696548 | A2 | 12 February 2014 |
| | | | | EP | 2696548 | B1 | 04 March 2020 |
| | | | | KR | 10-2014-0052971 | A | 07 May 2014 |
| | | | | KR | 10-2109408 | B1 | 26 May 2020 |
| | | | | US | 9363805 | B2 | 07 June 2016 |
| | | | | WO | 2012-138097 | A2 | 11 October 2012 |
| | | | | WO | 2012-138097 | A3 | 10 January 2013 |
| US | 2022-0322399 | A1 | 06 October 2022 | WO | 2021-066624 | A1 | 08 April 2021 |

Form PCT/ISA/210 (patent family annex) (July 2022)